# EUROPEAN PATENT SPECIFICATION

(11) **EP 4 227 504 B1**
(45) Date of publication and mention of the grant of the patent: **24.06.2026**
(21) Application number: 20961463.5
(22) Date of filing: 31.12.2020
(51) Int. Cl.: B62K 5/01, F01N 3/34, F01N 13/10, F01N 3/08, B62J 40/10, F02M 25/08

(54) **OFF-ROAD VEHICLE EQUIPPED WITH A SECONDARY-AIR INJECTION SYSTEM**
GELÄNDEFAHRZEUG MIT SEKUNDÄRLUFT-EINSPRITZSYSTEM
VÉHICULE TOUT-TERRAIN ÉQUIPÉ D'UN SYSTÈME D'INJECTION D'AIR SECONDAIRE

(30) Priority: 16.11.2020 CN 202011282152
(43) Date of publication of application: 16.08.2023
(73) Proprietor: Zhejiang CFMOTO Power Co., Ltd., Hangzhou, Zhejiang 310000 (CN)
(72) Inventor: XIE, Lebang, Hangzhou, Zhejiang 310000 (CN); DANG, Xiangyuan, Hangzhou, Zhejiang 310000 (CN); MENG, Linglong, Hangzhou, Zhejiang 310000 (CN); ZHU, Jiayao, Hangzhou, Zhejiang 310000 (CN); ZHANG, Xiaolei, Hangzhou, Zhejiang 310000 (CN); LI, Wenwu, Hangzhou, Zhejiang 310000 (CN); LI, Xuefeng, Hangzhou, Zhejiang 310000 (CN); TANG, Suce, Hangzhou, Zhejiang 310000 (CN); GUO, Changqing, Hangzhou, Zhejiang 310000 (CN); CHEN, Zhiyong, Hangzhou, Zhejiang 310000 (CN)
(74) Representative: Sun, Yiming
(86) International application number: PCT/CN2020/142589
(87) International publication number: WO 2022/099911

(56) References cited:
- CN-A- 107 035 485
- CN-Y- 2 866 847
- DE-A1- 19 808 500
- JP-A- 2000 018 031
- JP-A- 2001 355 440
- JP-A- 2005 201 218
- US-A1- 2003 192 502
- US-A1- 2005 173 918
- US-B1- 6 220 020

## Description

### FIELD OF THE DISCLOSURE

The present invention relates to an off-road vehicle and an engine thereof.

### BACKGROUND OF THE DISCLOSURE

With requirements for environmental protection, higher requirements are put forward for emission limits of off-road vehicles. For example, in 2016, the Euro IV standard was implemented for two-wheeled and three-wheeled motorcycles, and in 2017, the Euro IV standard was implemented for four-wheeled off-road vehicles. The European Union began to increase the requirements for fuel evaporative emissions for two-wheeled off-road vehicles in the Euro 4 stage. The specific emission indicators of Euro 4 are shown in TABLE 1.

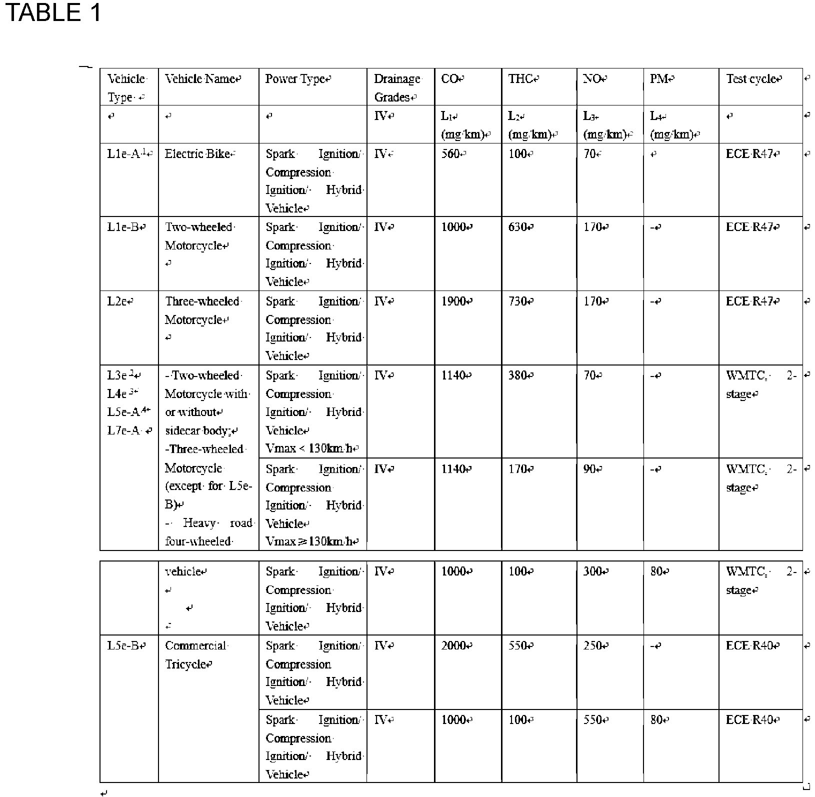

Higher requirements for emission standards are needed in various countries with the increasing demand for environmental protection. Therefore, there is a need to reduce the emission limit of engine, so as to improve the environmental performance indicators of vehicles.

US2005173918A1 discloses a saddle ride type four-wheel vehicle, which includes an electronic control type fuel injection system in a fuel supply system for an engine mounted thereon, wherein a fuel pump is disposed on the rear side relative to the rotational centre axis of front wheels and on the front side relative to the engine.

### SUMMARY OF THE DISCLOSURE

The objective of the present invention is to provide an engine capable of reducing the emission limit and an off-road vehicle using the engine. In order to achieve the objective, the invention is set out in the appended set of claims.

### ADVANTAGES

1. The exhaust gas from the combustion chamber is further oxidized by air, which reduces the content of CO and NOx in the exhaust gas, reduces the exhaust emission limit of CO below 700 mg/km, exhaust emission limit of NMHC below 47.6mg/km and exhaust emission limit of THC below 70mg/ km, and improves the environmental protection index of the off-road vehicle.
2. CO and NOx in the exhaust gas are oxidized, which releases heat, increases internal heat of the engine at the start stage of the cold engine. The engine quickly reaches the predetermined operating temperature, and start time is shortened, which further reduces the generation of exhaust gas and improves the environmental protection performance of the off-road vehicle. At the same time, the starting time of the cold engine is shortened, the heating time of the lubricating oil in the engine is shortened, the internal wear of the engine is reduced, and the service life of the engine is improved.
3. The further oxidation of exhaust gas can shorten the starting time of the cold engine and improve the handling of the off-road vehicle.

### BRIEF DESCRIPTION OF THE DRAWINGS

FIG. 1 is a perspective view of the off-road vehicle according to embodiments of the invention.
FIG. 2 is a perspective view of the engine of FIG. 1 seen from back to front.
FIG. 3 is a perspective view of the engine without exhaust system in FIG. 1 seen from front to back.
FIG. 4 is another side perspective view of the engine of FIG. 1.
FIG. 5 is a top perspective view of a cylinder head and an air supply pipe in FIG. 4.
FIG. 6 is a top perspective view of the cylinder head in FIG. 5.
FIG. 7 is another perspective view of the cylinder head in FIG. 5.
FIG. 8 is a sectional view of cylinder head in FIG. 6, in which the vector angle between a flow direction of air flowing into the exhaust passage and a flow direction of the exhaust gas flowing through the exhaust passage is greater than 90°.
FIG. 9 is a sectional view of cylinder head in FIG. 6, in which the vector angle between a flow direction of air flowing into the exhaust passage and a flow direction of the exhaust gas flowing through the exhaust passage is equal to 90°.
FIG. 10 is a sectional view of cylinder head in FIG. 6, in which the vector angle between a flow direction of air flowing into the exhaust passage and a flow direction of the exhaust gas flowing through the exhaust passage is less than 90°.
FIG. 11 is a sectional view of the air supply pipe in fluid communication with the exhaust passage, showing the angle β between an axis of the air supply pipe and an axis of the exhaust passage, β being less than 90°.
FIG. 12 is a sectional view of the air supply pipe in fluid communication with the exhaust passage, showing the angle β between an axis of the air supply pipe and an axis of the exhaust passage, β being greater than 90°.
FIG. 13 is a perspective view of an air filter of air supply passage and an engine air filter in FIG. 2.
FIG. 14 is a sectional view of the air filter of air supply passage in FIG. 2.
FIG. 15 is a sectional view of the throttle plug in the first air supply branch pipe in FIG. 13.
FIG. 16 is a sectional view of a first air supply branch pipe and a second air supply branch pipe in FIG. 13, in which the diameters of the first air supply branch pipe and a second air supply branch pipe are different.
FIG. 17 is a sectional view of a first air supply branch pipe and a second air supply branch pipe in FIG. 13, in which the diameters of the first air supply branch pipe and a second air supply branch pipe are different and the first air supply branch pipe is equipped with a throttle plug.
FIG. 18 is a perspective view of the air filter of air supply passage and the engine air filter in FIG. 2 independent of each other, in which the air filter of air supply passage corresponds to the single-cylinder engine.
FIG. 19 is a perspective view of the air filter of air supply passage in FIG. 2, in which the air pump actively delivers air, and the air filter of air supply passage corresponds to the dual-cylinder engine.
FIG. 20 is a perspective view of the air filter of air supply passage in FIG. 2, in which the air pump actively delivers air, and the air filter of air supply passage corresponds to the single-cylinder engine.
FIG. 21 is an exploded view of a dual-cylinder engine with a common engine air filter in FIG. 2.
FIG. 22 is a sectional view of the throttle plug in the first air supply branch pipe in FIG. 21.
FIG. 23 is a sectional view of a first air supply branch pipe and a second air supply branch pipe in FIG. 21, in which the diameters of the first air supply branch pipe and a second air supply branch pipe are different.
FIG. 24 is a sectional view of a first air supply branch pipe and a second air supply branch pipe in FIG. 21, in which the diameters of the first air supply branch pipe and a second air supply branch pipe are different and the first air supply branch pipe is equipped with a throttle plug.
FIG. 25 is an exploded view of a single cylinder engine with a common engine air filter in FIG. 2.
FIG. 26 is an exploded view of the dual-cylinder engine with a common engine air filter in FIG. 2, in which the common engine air filter actively supplies air.
FIG. 27 is an exploded view of a single-cylinder engine with a common engine air filter in FIG. 2, in which the common engine air filter actively supplies air.
FIG. 28 is a perspective view of fuel desorption in FIG. 1.
FIG. 29 is another perspective view of fuel desorption in FIG. 1.
FIG. 30 is a perspective view of a two-way valve in FIG. 28.
FIG. 31 is a sectional view of the two-way valve in FIG. 28.
FIG. 32 is a diagram of the fuel desorption controlled by the controller according to embodiments of the invention.
FIG. 33 is a three-dimensional view of the connection between the oil and gas pipeline and the main intake manifold of the multi-cylinder engine in FIG. 28.
FIG. 34 is a perspective view of oil and gas pipeline in FIG. 28, which is in fluid communication with the main intake manifold of the single-cylinder engine.
FIG. 35 is the sectional view of the main intake manifold in FIG. 34.
FIG. 36 is a perspective view of the exhaust system in FIG. 2.
FIG. 37 is an exploded view of the exhaust system in FIG. 2.
FIG. 38 is a sectional view of the graphite seal sleeve in FIG. 37.
FIG. 39 is a sectional view of the gas treatment component in FIG. 36.
FIG. 40 is a perspective view of the spark collector in FIG. 39.
FIG. 41 is a perspective view of the fuel injector bracket in FIG. 1.
FIG. 42 is a sectional view of the vehicle cover in FIG. 1.

### DETAILED DESCRIPTION

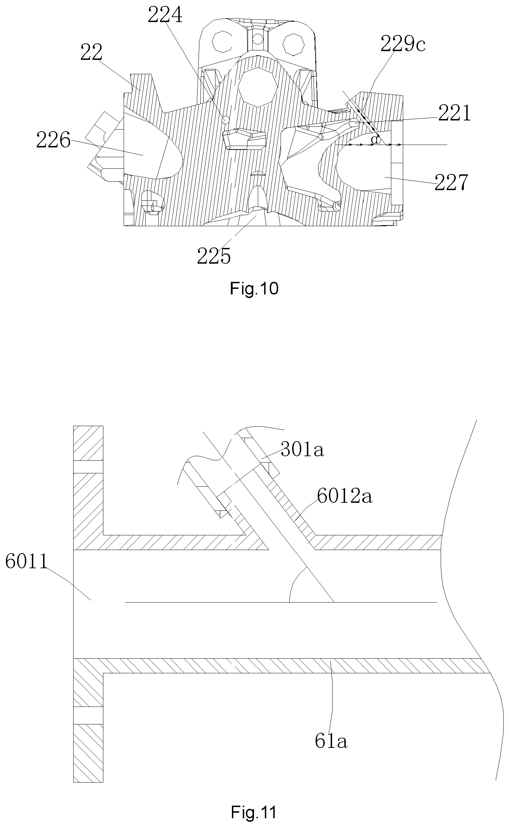

For better understanding of the above objects, features and advantages of the present disclosure, the embodiments of the present disclosure will be described in detail below with reference to the accompanying drawings. In addition, the structure involved in this disclosure or the technical terms used are further described below. It should be understood and explained according to the general description in the field unless special indication. Embodiments shown in FIG. 10, 11 and 12 are not encompassed by the wording of the claims but are considered as useful for understanding the invention.

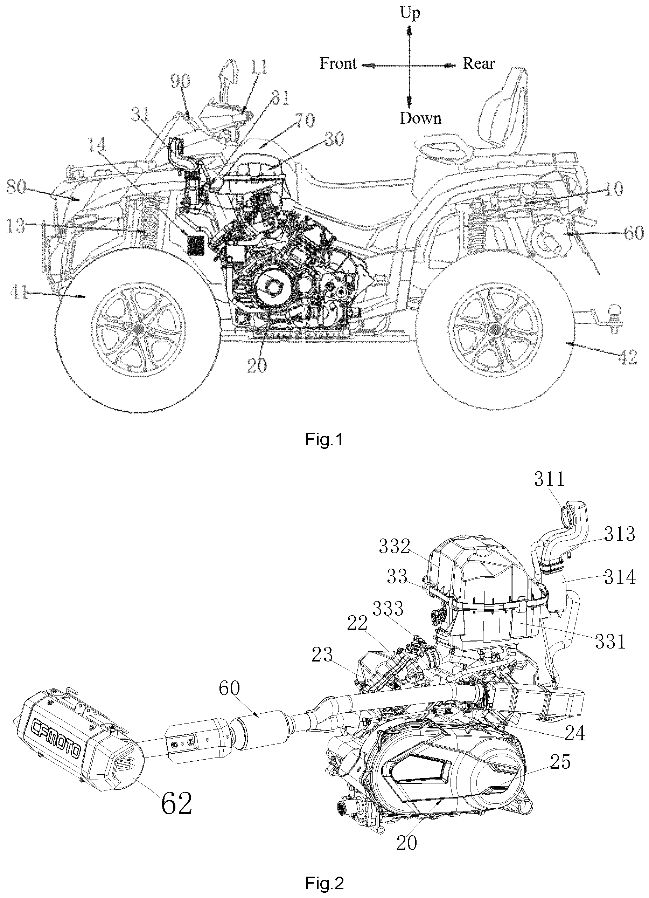

The terms "first" and "second" in the present disclosure are only for convenience of description to distinguish different components with the same name, and do not indicate the order or primary and secondary relationship. The general orientations of front, rear, up (upper), down (lower), left and right for the off-road vehicle 100 are based on the rider's perspective and are defined in FIG. 1.

### Carbon canister

Carbon canister is a portion of the gasoline evaporation control system (EVAP), which is designed to prevent gasoline vapor from escaping into the atmosphere after the engine is stopped. Optionally, the gasoline vapor and fresh air are mixed in the tank and stored in the activated carbon tank after the engine is stopped. A solenoid valve installed between the activated carbon canister and the intake manifold is opened when the engine is started, and the gasoline vapor in the activated carbon canister is brought into the cylinder by clean air under the vacuum of the intake manifold for combustion, which not only reduces emissions, but also reduces fuel consumption.

### Duty cycle

The ratio of the time when the signal or system is in the on-state to the overall cycle is called duty cycle. The duty cycle is usually expressed as a percentage or ratio. Cycle is the time it takes for the signal to complete a switching cycle. The duty cycle (expressed in percentage) may be expressed by the formula: D=PW/T x 100% [2]; or the duty cycle (expressed in decimal) may also be expressed as: D=PW/T, wherein, D refers to duty cycle, PW refers to pulse width (pulse effective time), and T refers to the total period of the signal. Therefore, a duty cycle of 60% means that the signal is in the on-state for 60% of the time, but in the off-state for 40% of the time. The "on-state time" for the duty cycle of 60% may be a fraction of a second, a day or even a week, depending on the cycle length. The duty cycle may be used to describe the percentage of the conduction signal in the electrical equipment, such as the conduction time of the high-frequency power switching device in the switching power supply or the time that the life system (such as neurons) remains active. The duty cycle of periodic signal is generally not expressed in percentage but in decimal. The duty cycle may also be expressed as a Greek letter, α.

As shown in FIG. 1, the off-road vehicle includes a frame 10, an engine 20, front wheels 41, rear wheels 42, a fuel supply system 70, a vehicle cover 80, a dashboard 90, a steering system 11, a suspension system 13, and a controller 14. The off-road vehicle uses fuel engine 20 to drive rear wheels 42. The suspension system 13 includes a front suspension 131 connected to front wheels 41 in the front of the frame 10 and a rear suspension 132 connected to rear wheels 41 at the rear of the frame 10. The fuel supply system 70 for supplying fuel to the engine is arranged on the frame 10.

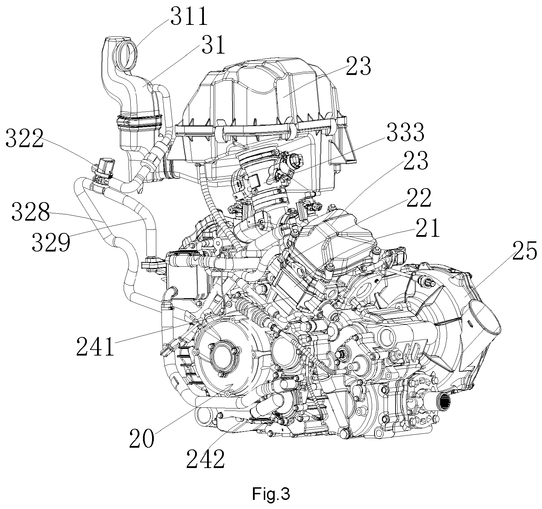

As shown in FIGS. 2-4, the engine 20 is located at the lower portion of the middle of frame 10. A combustion chamber (not shown) is arranged in the engine 20. The fuel from the fuel supply system 70 flows into the combustion chamber through a pipeline, 8 and then the spark plug ignites the fuel in the combustion chamber to generate the power to push the piston (not shown) to move downward, thus providing power for the off-road vehicle. The engine 20 includes cylinder block 21, cylinder head 22, cylinder head cover 23, crankcase 24, gearbox 25, and the like. The crankcase 24 includes an upper crankcase 241 and a lower crankcase 242. The upper crankcase 241 may be integrally molded with the cylinder block 21. The lower crankcase (also called oil sump) 242 is generally used to store lubricating oil and seal the upper crankcase 241. The cylinder head 22 is mounted on the cylinder block 21 and seals cylinder block 21 from the top. The cylinder head cover 23 is connected to the cylinder head 22 and seals the upper portion of the cylinder head 22 to define a closed cavity.

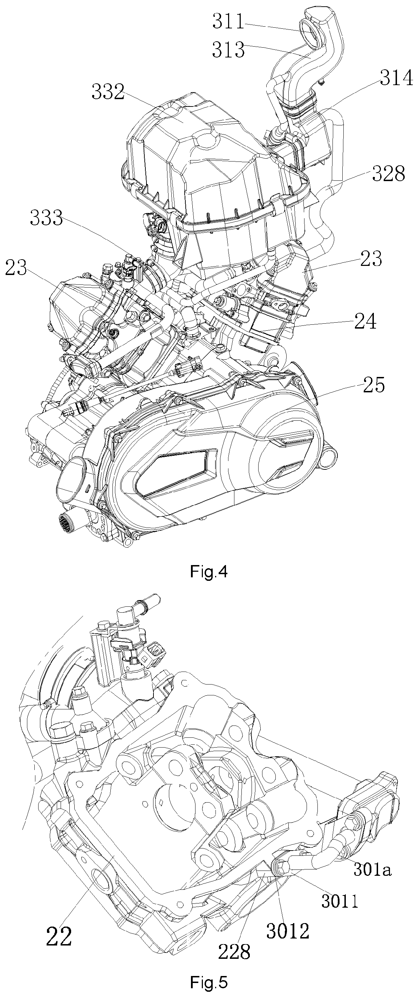

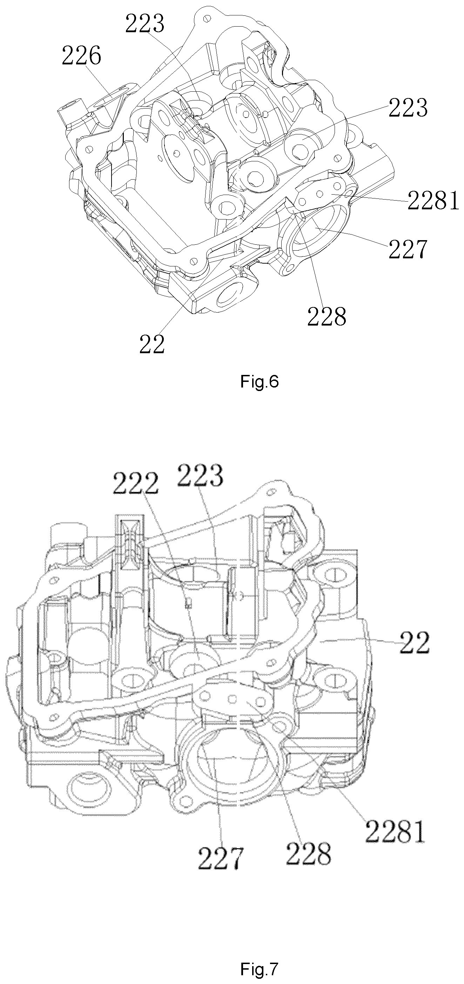

As shown in FIGS. 5-8, in some embodiments, the cylinder head 22 defines a cooling water passage 221, a plurality of holes 222 for mounting valves, a plurality of cavities 223 for mounting valve spring, a lubricating oil cavity 224, a cavity 225 for the combustion chamber, an intake passage 226 communicating with the cavity 225 for the combustion chamber, and an exhaust passage 227 in fluid communication with the cavity 225 for the combustion chamber, etc. The exhaust gas generated in the combustion chamber is discharged from the exhaust passage 227. An air supply passage 229a in fluid communication with the exhaust passage 227 is defined on the cylinder head 22. The air flows into the exhaust passage 227 from the air supply passage 229a to further oxidize the exhaust gas in the exhaust passage 227. The further oxidation to the exhaust gas from combustion reduces the exhaust emission limit of CO below 700 mg/km, exhaust emission limit of NMHC below 47.6mg/km and exhaust emission limit of THC below 70mg/ km. The air supply passage 229a defines an air inlet and an air outlet The vector angle between a flow direction of air flowing into the exhaust passage and a flow direction of the exhaust gas flowing through the exhaust passage is less than 90°.

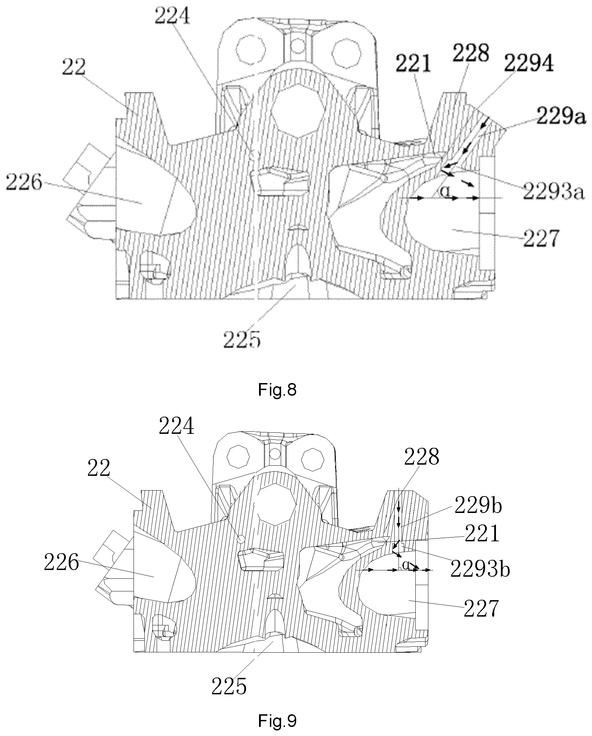

As shown in FIG. 8, the cylinder head 22 defines an air flow buffer 2293a in fluid communication with the air supply passage 229a. The air flows through the air supply passage 229a, the air flow buffer 2293a and enters to the 9 exhaust passage 227, successively. The cross-sectional area of the air flow buffer 2293a is larger than that of the air supply passage 229a. The air flow buffer 2293a is shaped as a trumpet, hemispherical or cylindrical enlargement. The air flow buffer 2293a slows down the rate of air flowing out of the air supply passage 229a, and changes the air flow direction after the air collides with the inner wall of the air flow buffer 2293a, making the air flow direction substantially the same as the exhaust gas flow direction.

The air supply passage 229a is not in fluid communication with the cooling water passage 221, the plurality of cavities 223 for mounting the intake valve spring, the camshaft lubricating oil cavity 224, the cavity 225 for the combustion chamber and the intake passage 226 defined on the cylinder head 22. The air supply passage 229a is adjacent to the cooling water passage 221 with a barrier portion 2294 between them. The barrier portion 2294 is a portion of the cylinder head 22. The air supply passage 229a is partially defined on the barrier portion 2294, so the barrier portion 2294 provides space for the air supply passage 229a.

As shown in FIGS. 5-8, in some embodiments, an air supply passage seat 228 is provided on the cylinder head 22. The air supply passage 229a is arranged on the air supply passage seat 228, with an axis of the air supply passage 229a perpendicular to a top surface 2281 of the air supply passage seat 228. The engine 20 further includes an intake system 30, which may be used as a portion of the engine or as a system independent of the off-road vehicle outside the engine as required. The intake system 30 includes an air supply pipe 301a, through which the air is input into the air supply passage 229a. A connection seat 3011 for fixing the air supply pipe 301a is fixed on the air supply passage seat 228 by screws. A sealing gasket 3012 is arranged between the connection seat 3011 and the air supply passage seat 228, ensuring the sealing performance of the cylinder head 22.

As shown in FIG. 9, in another embodiment different from the embodiment in FIG. 8, the cylinder head 22 defines an air supply passage 229b in fluid communication with the exhaust passage 227, the air supply passage 229b defines an air inlet (not shown) and an air outlet (not shown). A vertical plane is defined as a plane along the centerline of the off-road vehicle, and an angle between the projection of the axis in the length direction of the air supply passage on the vertical plane and the projection of the axis in the length direction of the exhaust passage on the vertical plane is greater than or equal to 90°. In other words, the vector angle between a flow direction of air flowing into the exhaust passage and a flow direction of the exhaust gas flowing through the exhaust passage is greater than or equal to 90°. The cylinder head 22 defines an air flow buffer 2293b in fluid communication with the air supply passage 229b. The cross-sectional area of the air flow buffer 2293b is larger than that of the air supply passage 229b. The air flow buffer 2293b is shaped as a trumpet, hemispherical or cylindrical enlargement. The air flow buffer 2293b slows down the rate of the air flowing out of the air supply passage 229b, and changes the air flow direction after the air collides with the inner wall of the air flow buffer 2293b, making the air flow direction substantially the same as the exhaust gas flow direction.

FIG. 10, FIG. 11 and FIG. 12 illustrate alternative air-supply passage angles that are not covered by the present claims.

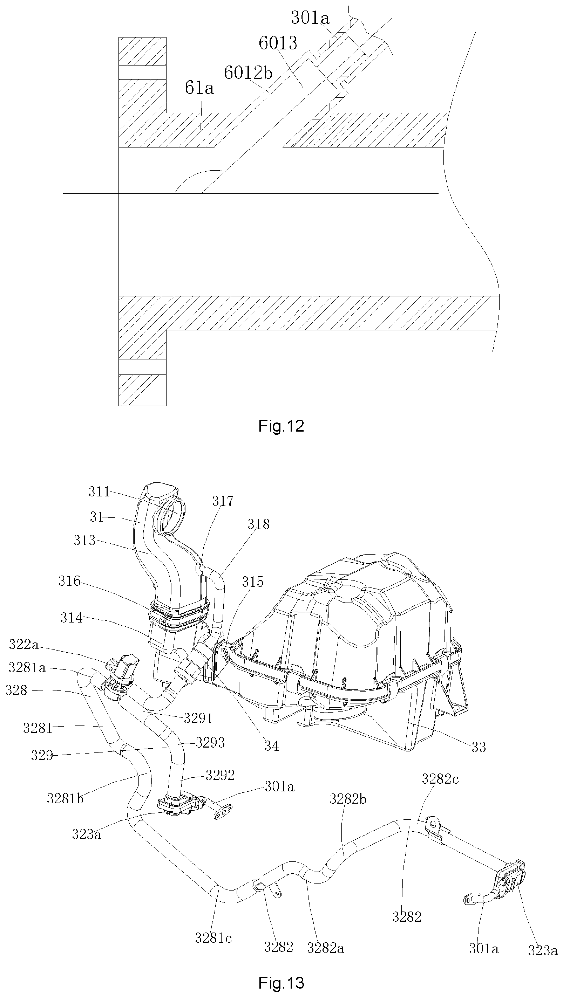

As shown in FIG. 13, in some embodiments, the intake system 30 provides filtered air to the air supply passage 229a. The intake system 30 includes an intake passage 31, air filter of air supply passage 34, an engine air filter 32 and a main intake manifold 33 that supply air to the engine 20, in which the engine air filter 32 and the air filter of air supply passage 34 are independent of each other, that is, the air supply pipe 301a is in fluid communication with the air filter of air supply passage 34, and the main intake manifold 33 is in fluid communication with the engine air filter 34. The engine air filter 32 and the air filter of air supply passage 34 share the same air intake passage 31. When the engine is started, the filtered air is input to the air supply pipe.

In an exampled embodiment, the air inlet 311 facing towards the rear wheels 42 is defined on the side wall of the intake passage 31, to achieve natural suction and maintain a stable air intake. The air inlet 311 is adjacent to the dashboard/instrument panel 90, which can increase the height of the air inlet 311 and keep the air entering from the air inlet 311 cleaner. The intake passage 31 includes a first segment 313, a second segment 314, and a third segment 315 connected to the second segment 314. The first segment 313 extends substantially along a height direction of the off-road vehicle 100, with an air inlet 311 defined on a side wall of the first segment 313. The second segment 314 may be a L-shaped hose. One end of the second segment 314 is sleeved onto the bottom end of the first segment 313, with a tension ring 316 locked at a joint of the first segment 313 and the second segment 314, ensuring the connection tightness and airtightness of the intake passage 31. The third segment 315 extends substantially along a length direction of the off-road vehicle 100, with one end connected to the engine air filter 32, and the other end connected to the second segment 314.

As shown in FIG. 13-14, in some embodiments, the air filter of air supply passage 34 is a tubular. The air filter of air supply passage 34 is covered with a rubber sleeve 340 connected to one side of the frame 10, so as to fix the air filter of air supply passage 34. The air filter of air supply passage 34 includes an air filter housing 341 and a filter paper 342 contained in the air filter housing 341. The filter paper 342 is filled at the bottom of the air filter housing 341, but not filled with the entire air filter housing 341.

The air in the air filter of air supply passage 34 is flows straight, which improves filtration efficiency for air. An inlet connection 3411 is defined at one end of the air filter housing 341, with an outlet connection 3412 defined at the other end of the air filter housing 341. An air supply branch pipe 318 is sleeved onto the inlet connection 3411.

In some embodiments, a pipe joint 317 is defined on one side wall of the intake passage 31, and the linear distance from the pipe joint 317 to the instrument panel 90 is greater than the linear distance from the air inlet 311 to the instrument panel 90. The pipe joint 317 is connected to the air supply branch pipe 318, which is connected to the air filter of air supply passage 34. After entering the intake passage 31 via the air inlet 311, a portion of the fresh air enters the air supply branch pipe 318 through the pipe joint 317, and then enters the air filter of air supply passage 34.

As shown in FIG. 13-14, in some embodiments, the intake system 30 further includes an on-off valve 322a connected to and in communication with the outlet end of the air filter of air supply passage 34 (through a pipeline) and a one-way valve 323a. The on-off valve may be selected from the group consisting of duty ratio solenoid valve, normally open solenoid valve and normally closed solenoid valve. The on-off valve 322a is controlled by the controller 14 of the off-road vehicle. The controller may be an on-board computer. In an alternative embodiment, the off-road vehicle further includes a valve controller (rather than the controller 14) for controlling the on-off valve 322a. The valve controller may be an electronic control unit (ECU). When the engine cold is started, the on-off valve 322a is opened. The air filtered by the air filter of air supply passage 34 enters the air supply pipe 301a after passing through the on-off valve 322a, thus, the air supply in the cold stage is realized. When the engine reaches the preset temperature, the on-off valve 322a is closed, thus stopping the delivery of air to the air supply pipe 301a.

As shown in FIG. 13, in some embodiments, the engine is a multi-cylinder engine having a front cylinder and a rear cylinder. The on-off valve 322a has two outlet ends, with one outlet end adjacent to the front cylinder of the engine and connected to the first air supply branch pipe 329, and the other outlet end adjacent to the rear cylinder of the engine and connected to the second air supply branch pipe 328. The first air supply branch pipe 329 includes a first straight pipe section 3291, a second straight pipe section 3292 and a curved pipe section 3293 connecting the first straight pipe section 3291 and the second straight pipe section 3292. It should be noted that the shape of the first air supply branch pipe 329 may be redesigned according to the layout of the first air supply branch pipe 329 on the engine and frame.

The second air supply branch pipe 328 includes a first pipe body 3281 connected to the on-off valve 322a, a second pipe body 3283 extending from one side of the engine 20 to the other side of the engine 20, and a pipe joint 3282 connected between the first pipe body 3281 and the second pipe body 3283. The pipe joint 3282 is connected to the rear cylinder of the engine 20 by bolts. The first pipe body 3281 includes a first elbow portion of first pipe body 3281a, an arc-shaped pipe portion of first pipe body 3281b connected to the first elbow portion of first pipe body 3281a and a second elbow portion of first pipe body 3281c connected to the arc-shaped pipe portion of first pipe body 3281b, and the second elbow portion of first pipe body 3281c is connected to the pipe joint 3821b; The second pipe body 3282 includes a first elbow portion of second pipe body 3282a, a second elbow portion of second pipe body 3282b and a third elbow portion of second pipe body 3282c connected to the one-way valve 323a. It should be noted that the shape of the first pipe body 3281 may be redesigned according to the layout of the first pipe body 3281 on the engine and frame.

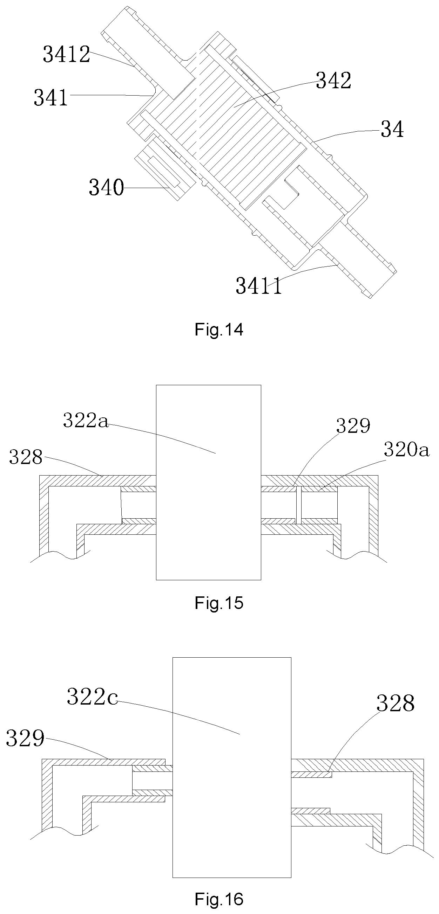

As shown in FIG. 15, in some embodiments, the first air supply branch pipe 329 is provided with a throttle plug 320a. The distribution of air flow through the on-off valve 322a can be directly controlled by the throttle plug 320a. It should be noted that in other embodiments, the second air supply branch pipe 328 is provided with a throttle plug 320a. Alternatively, the first air supply branch pipe 329 and the second air supply branch pipe 328 are both provided with a throttle plug 320a.

As shown in FIG. 16, in some embodiments, the diameters of the first air supply branch pipe 329 and the second air supply branch pipe 328 are different, that is to say, the diameter of the first air supply branch pipe 329 may be greater than that of the second air supply branch pipe 328, or may be less than that of the second air supply branch pipe 328.

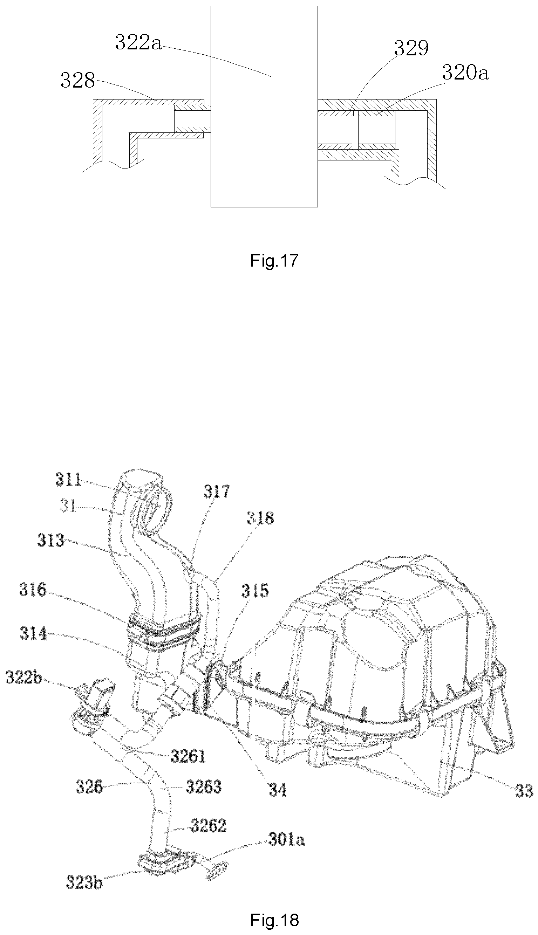

As shown in FIG. 17, in some embodiments, the diameters of the first air supply branch 329 and the second air supply branch 328 are different, and the first air supply branch 329 is provided with a throttle plug 320a. The distribution of air flow through the on-off valve 332a can be directly controlled by the throttle plug 320a. It should be noted that in other embodiments, the throttle plug 320a may be arranged in second air supply branch pipe 328, or in both the first air supply branch pipe 328 and the second air supply branch pipe 328.

As shown in FIG. 18, in some embodiments, the engine is a single-cylinder engine. An outlet end of the on-off valve 322b is connected to an air delivery pipe 326. The outlet end of the air delivery pipe 326 is connected to a one-way valve 323b connected to the air supply pipe 301a adjacent to the engine cylinder. The air delivery pipe 326 includes a first straight pipe portion 3261, a second straight pipe portion 3262 and a curved pipe portion 3263 connecting the first pipe portion 3261 and the second pipe portion 3262. The second pipe portion 3262 is connected to the one-way valve 323b. It should be noted that the specific shape of the air delivery pipe 326 can be redesigned according to the layout of the air delivery pipe on the engine and frame.

As shown in FIGS. 13 and 18, in some embodiments, the air filter of air supply passage 34 is a naturally aspirated air filter, which is connected to the air supply pipe 301a. The engine 20 supplies air into the exhaust passage 227 or the exhaust conduit 61a by natural suction.

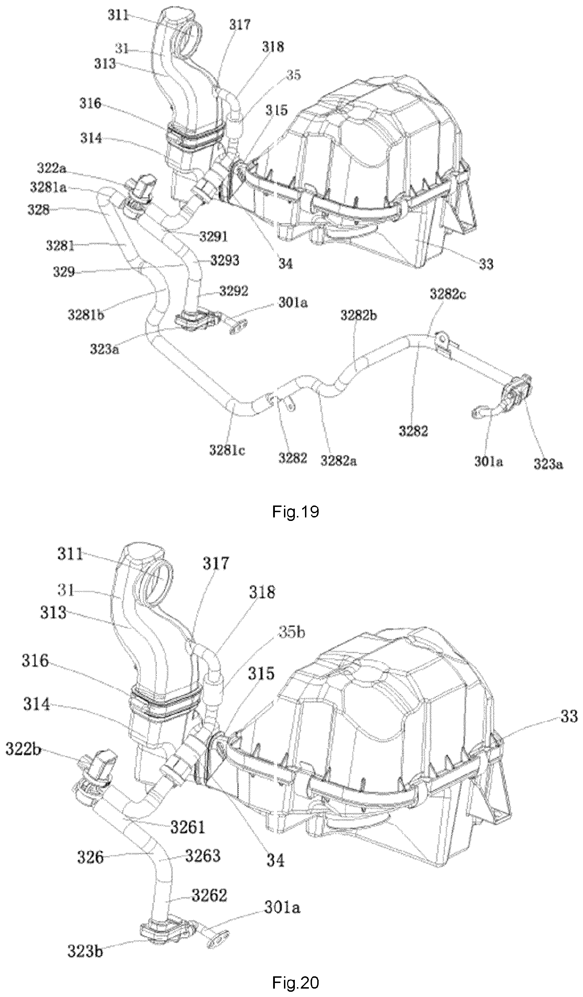

As shown in FIG. 19 and FIG. 20, in some embodiments, the engine may be a multi-cylinder engine (shown in FIG. 19) or a single-cylinder engine (shown in FIG. 20). The intake system 30 further includes an air pump 35 that pumps air into the air filter of air supply passage 34 through a pipeline. The controller 14 controls the opening of the air pump 35, and further controls the air supply volume of the air pump 35 to the air supply passage 229a. It should be noted that in other embodiments, the off-road vehicle may further include an air pump controller (not shown), and the air pump 35 is controlled by the air pump controller.

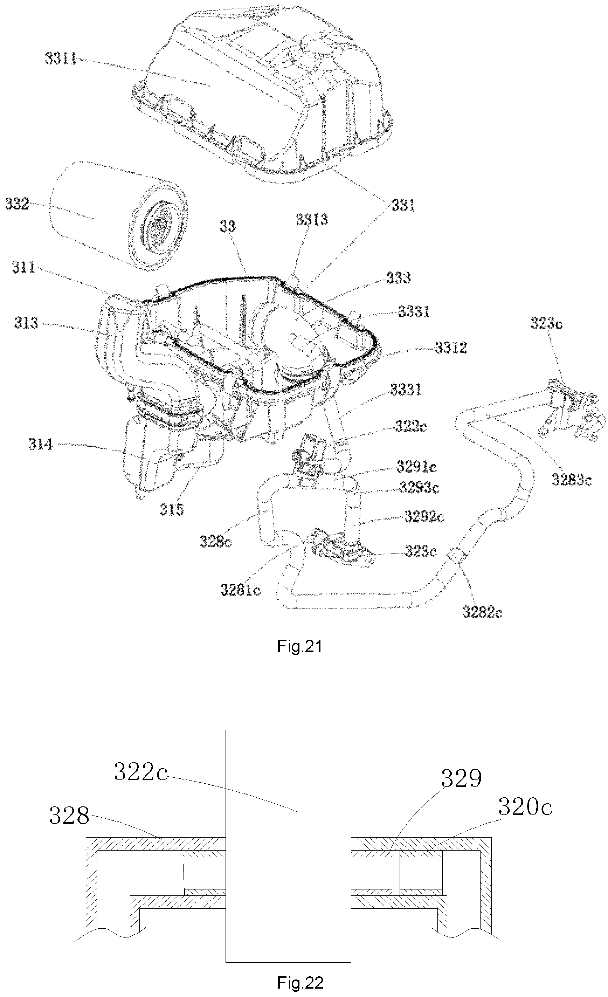

As shown in FIG. 21, in some embodiments, the intake system 30 provides filtered air into the exhaust gas. The intake system 30 includes an engine air filter 33, an on-off valve 322c, a one-way valve 323c, and main intake manifold 333. The engine air filter 33 includes an air filter box 331 and air filter element 332. The main intake manifold 33 is in fluid communication with the engine air filter 33 and the combustion chamber. The main intake manifold 333 is connected to an intake branch manifold 3331, which is connected to the on-off valve 322c through a pipeline, and the on-off valve 322c is connected to the air supply pipe 301a. Fresh air enters the air supply pipe through the inlet branch manifold 3331 and the on-off valve 322c, thus realizing further oxidation of exhaust gas by filtered air when the engine is started.

The on-off valve 322c may be selected from the group consisting of duty ratio solenoid valve, normally open solenoid valve and normally closed solenoid valve. The on-off valve 322c is controlled by the controller 14. Alternatively, the off-road vehicle may further include a valve controller for controlling the on-off valve 322c. The on-off valve 322c works when the engine cold is started, and the filtered air flows into the air supply passage through the on-off valve 322c.

As shown in FIG. 21, in some embodiments, the engine is a multi-cylinder engine having a front cylinder and a rear cylinder. The on-off valve 322c has two outlet ends, with one outlet end adjacent to the front cylinder of the engine and connected to the first air supply branch pipe 329c, and the other outlet end adjacent to the rear cylinder of the engine and connected to the second air supply branch pipe 328c. The first air supply branch pipe 329c includes a first straight pipe section 3291c, a second straight pipe section 3292c and a curved pipe section 3293c connecting the first straight pipe section 3291c and the second straight pipe section 3292c. It should be noted that the shape of the first air supply branch pipe 329c may be redesigned according to the layout of the first air supply branch pipe 329 on the engine 20 and frame 10. The second air supply branch pipe 328c includes a first pipe body 3281c connected to the on-off valve 322c, a second pipe body 3283c extending from one side of the engine 20 to the other side of the engine 20, and a pipe joint 3282c connected between the first pipe body 3281c and the second pipe body 3283. The pipe joint 3282c is connected to the rear cylinder of the engine 20 by bolts. **It** should be noted that the shape of the first pipe body 3281 may be redesigned according to the layout of the first pipe body 3281 on the engine and frame.

As shown in FIG. 22, in some embodiments, the first air supply branch pipe 329c is provided with a throttle plug 320c. The throttle plug 320c can directly control the distribution of air flow after passing through the on-off valve 322c. It should be noted that in other embodiments, the throttle plug 320c may be arranged in second air supply branch 328c, or in both the first air supply branch pipe 329c and the second air supply branch pipe 328c.

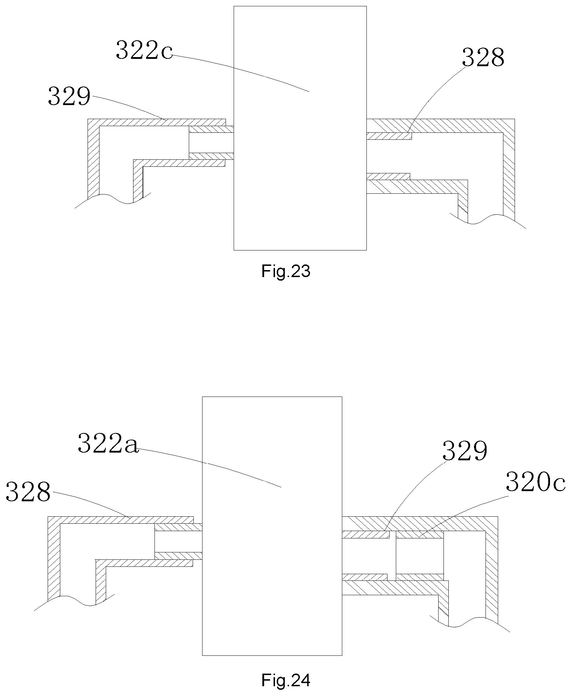

As shown in FIG. 23, in some embodiments, the diameters of the first air supply branch pipe 329c and the first air supply branch pipe 328c are different, that is to say, the diameter of the first air supply branch pipe 329c may be greater than that of the second air supply branch pipe 328c, or may be less than that of the second air supply branch pipe 328c.

As shown in FIG. 24, in some embodiments, the first air supply branch 329 is provided with a throttle plug 320c. The distribution of air flow through the on-off valve can be directly controlled by the throttle plug 320c. It should be noted that in other embodiments, the throttle plug 320c may be arranged in second air supply branch pipe, or in both the first air supply branch pipe 328 and the second air supply branch pipe 329.

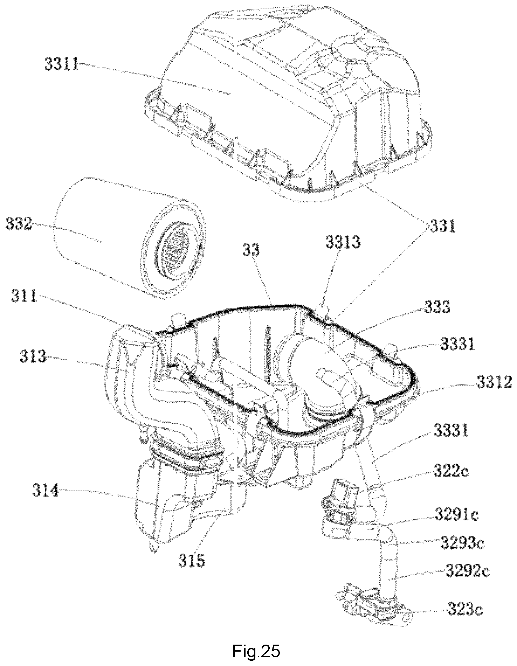

As shown in FIG. 25, in some embodiments, the engine is a single-cylinder engine. An outlet end of the on-off valve 322b is connected to an air delivery pipe 326c. The outlet end of the air delivery pipe 326c is connected to a one-way valve 323c connected to the air supply pipe 301a adjacent to the engine cylinder. The air delivery pipeline 326c includes a first straight pipe portion 3261c, a second straight pipe portion 3262c and a curved pipe portion 3263c connecting the first straight pipe portion 3261c and the second straight pipe portion 3262c. The second straight pipe portion 3262c is connected to the one-way valve 323c. It should be noted that the specific shape of the air delivery pipe 326c can be redesigned according to the layout of the air delivery pipe on the engine and frame.

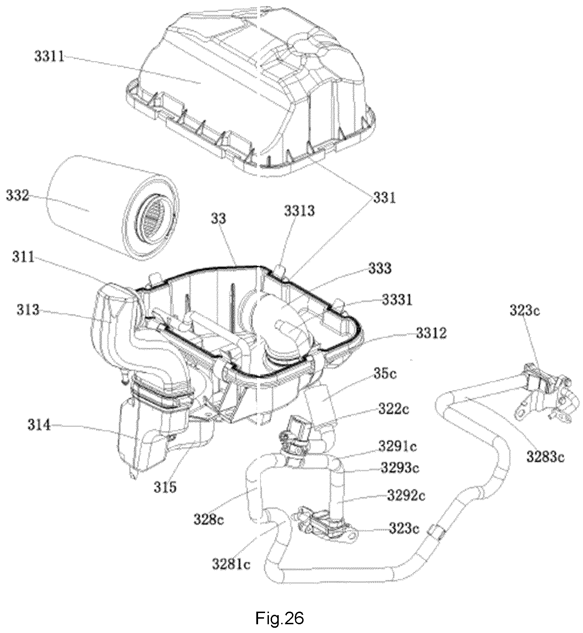

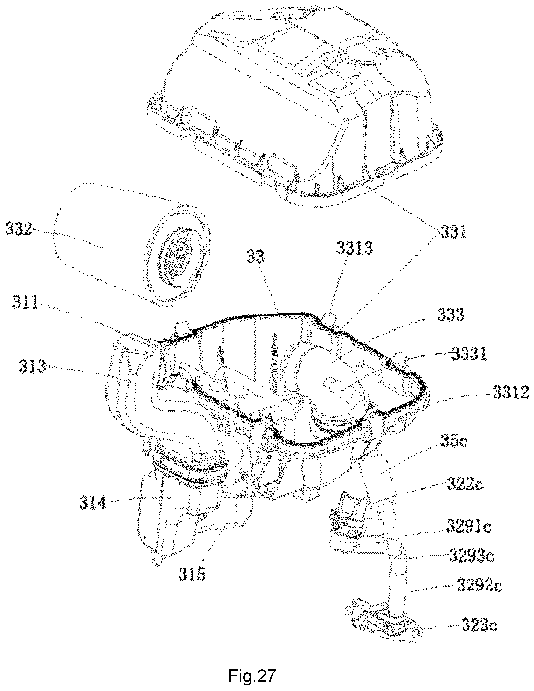

As shown in FIG. 26-27, in some embodiments, the intake branch manifold 3331 is provided with an air pump 35c that pumps air. The controller 14 controls the opening of the air pump 35c, and further controls the air supply volume of the air pump to the air supply passage 229a. The off-road vehicle may further include an air pump controller, and the air pump 35c is controlled by the air pump controller. The off-road vehicle is specially equipped with a valve controller to control the opening and closing of the air pump 35c, which is convenient for vehicle routing.

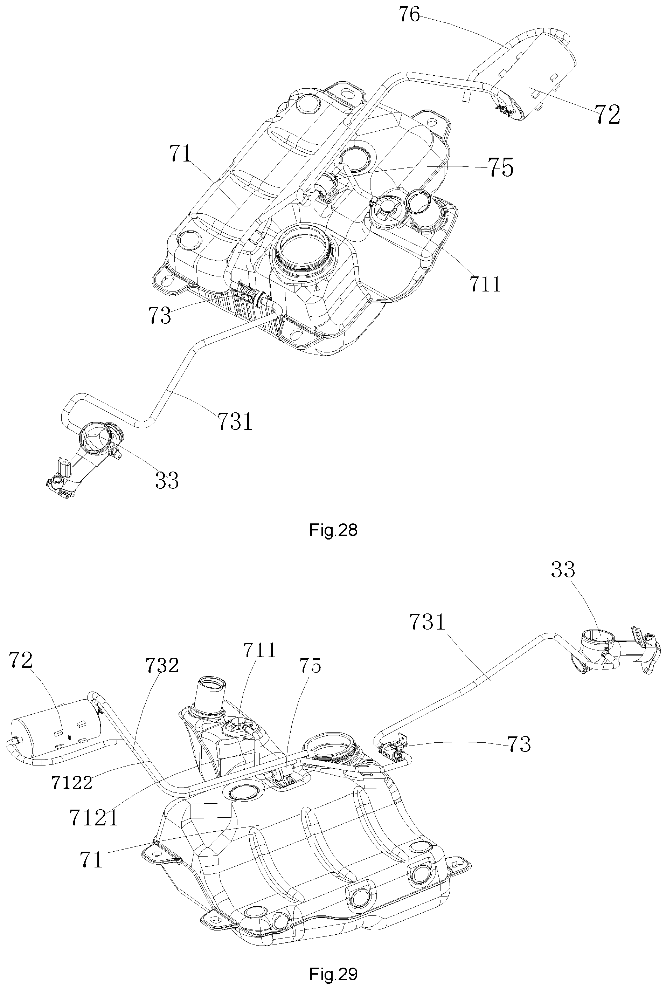

As shown in FIG. 28-29, in some embodiments, the fuel supply system 70 includes a fuel tank 71, a carbon canister 72, a carbon canister control valve 73 and a desorption controller (not shown). The fuel tank 71 is arranged at the front upper portion of the frame 10. The volatile pipe interface 711is arranged on the fuel tank 71. A first volatile pipe 7121 is arranged on the fuel tank 71, with one end connected to the volatile pipe interface 711, and the other end connected to a two-way valve 75. A second volatilization pipe 7122 is connected between the two-way valve 75 and the carbon canister 72. The first volatile pipe 7121 and the second volatile pipe 7122 are arranged along the outer wall of the fuel tank 71. The fuel volatilized in the fuel tank 71 enters the first volatile pipe 7121 through the fuel volatile interface 711, then enters the second volatile pipe 7122 through the two-way valve 75, and then enters the carbon canister 72 and is stored in the carbon canister 72. The carbon canister 72 is connected to an air intake pipe 76 which is connected to the inner cavity of the carbon canister 72. Air enters the carbon canister 72 through the air intake pipe 76, and mixes with the fuel in the carbon canister 72 to form a mixture of fuel and gas. The inlet end of carbon canister control valve 73 is connected to carbon canister 72 through carbon canister pipe 732.

In an exampled embodiment, the outlet end of carbon canister control valve 73 is connected to the oil and gas pipeline 731. The oil and air mixture in the oil and gas pipeline 731 enters the engine combustion chamber. In other embodiments, the carbon canister 72 can be integrated with a carbon canister control valve 73, and carbon canister 72 is connected to the fuel and air delivery pipe 731 through carbon canister control valve 73. In other embodiments, the fuel and air delivery pipe 731 may be integrated with the carbon canister control valve 73, the carbon canister 72 is directly connected to the inlet end of the carbon canister control valve 73.

As shown in FIG. 28-29, in some embodiments, one end of the first volatile pipe 7121 is connected to the volatile pipe interface 711, and the other end is connected to a two-way valve 75. The two-way valve 75 is connected to the carbon canister 72 through the second volatile pipe 7122. The fuel and air volatilized from the fuel tank 71 enters the carbon canister through the two-way valve. When the fuel tank is under negative pressure, the outside air enters the fuel tank through the carbon canister and two-way valve to maintain the internal pressure of the fuel tank constant. In other embodiments, the two-way valve 73 may be a component integrated on the fuel tank 71, which is connected to the first volatile pipe 7121 through the two-way valve 75. The first volatile pipe 7121 and the second volatile pipe 7122 are arranged along the outer wall of the fuel tank 71.

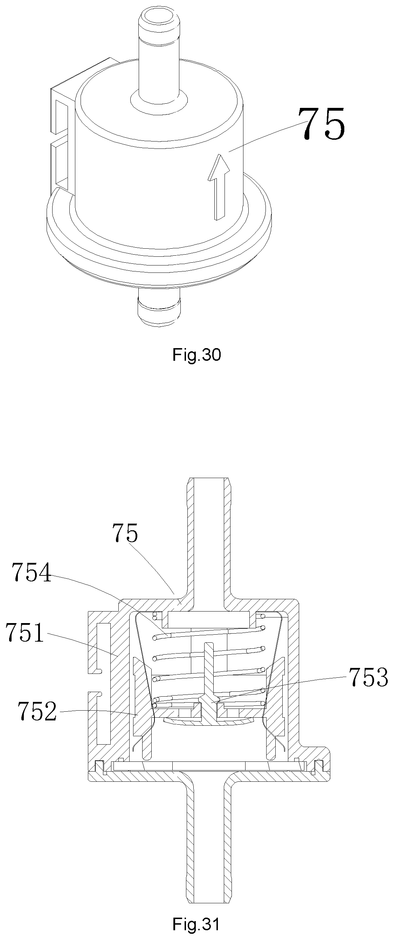

As shown in FIG. 30-31, in some embodiments, the two-way valve 75 includes a valve body having a passageway, a valve seat 752, a valve element 753 and a spring 754, the valve seat 754 is arranged in the passageway, and the middle of the valve seat 752 and the portion adjacent to the inner wall of the passageway both defines a plurality of through holes. The spring 754 is sleeved on the valve element 753. When the fuel tank is under negative pressure, the external air pressure is greater than the internal pressure of the fuel tank. The external air pushes the valve element 753 and valve seat 752 to compress the spring. At this time, air flows into the fuel tank from the through holes at the edge of valve seat 752. When the internal pressure of the fuel tank is higher than the external air pressure, the fuel and air in the fuel tank will push the valve element 753, and then the valve element 753 and valve seat 752 will no longer contact, and the fuel and air in the fuel tank will overflow through the through hole in the center of valve seat 752, thus reducing the air pressure in the fuel tank.

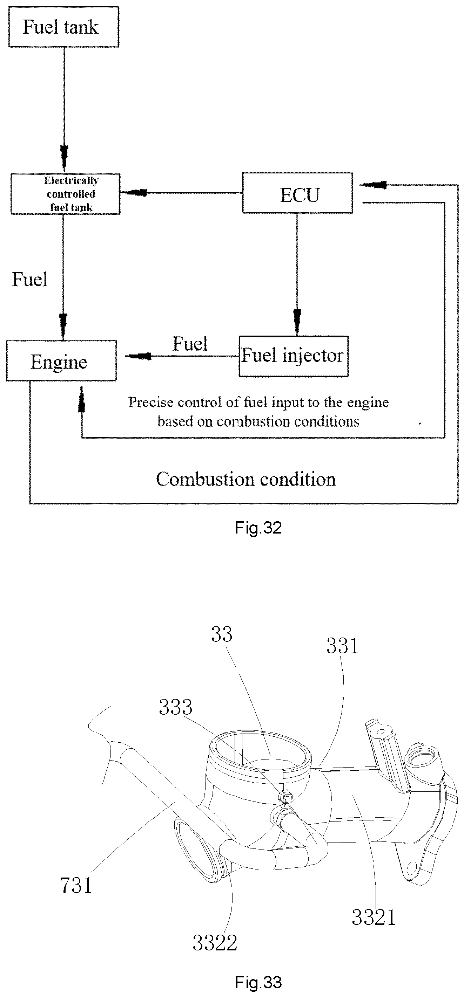

As shown in FIG. 32, in some embodiments, the carbon canister control valve 73 is controlled by a desorption controller, which is the controller 14. When the engine cold is started, the amount of fuel and air in the carbon canister entering the combustion chamber is controlled by the desorption controller to reduce the exhaust emission limit. The corresponding fuel volatilization index is the sum of the fuel volatilization when the engine is warmed up for half an hour and the fuel volatilization when the vehicle is placed for one hour after running a World Motorcycle Test Cycle (WMTC), which is less than 1g. The controller 14 is arranged at the middle, lower portion of one side of the frame. In other schemes, the off-road vehicle may further include a carbon canister controller, and the carbon canister control valve 73 is controlled by the carbon canister controller.

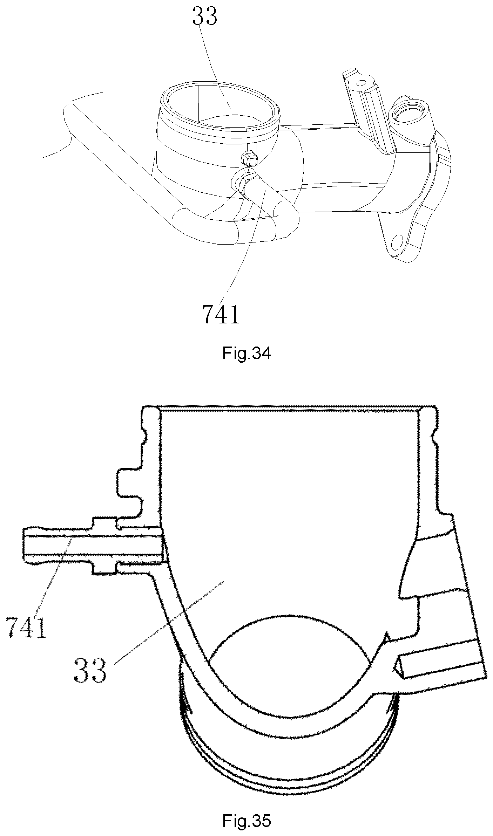

As shown in FIG. 28 and FIG. 33-35, in some embodiments, the oil and gas pipeline 731 is connected to the main intake manifold 333, and the oil and gas pipeline 731 enters the main intake manifold 333, and then enters the combustion chamber of the engine with filtered air for combustion. A pipe connector 741 is connected to the main intake manifold 333, and the pipe connector 741 is screwed with the main intake manifold 333. The oil and gas pipeline 731 is connected to the main intake manifold 333.

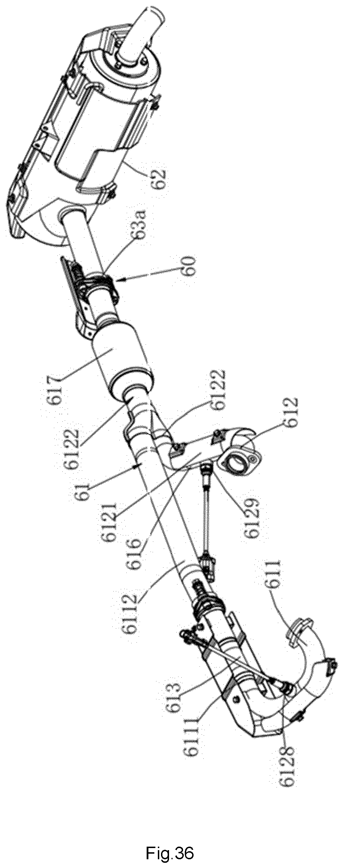

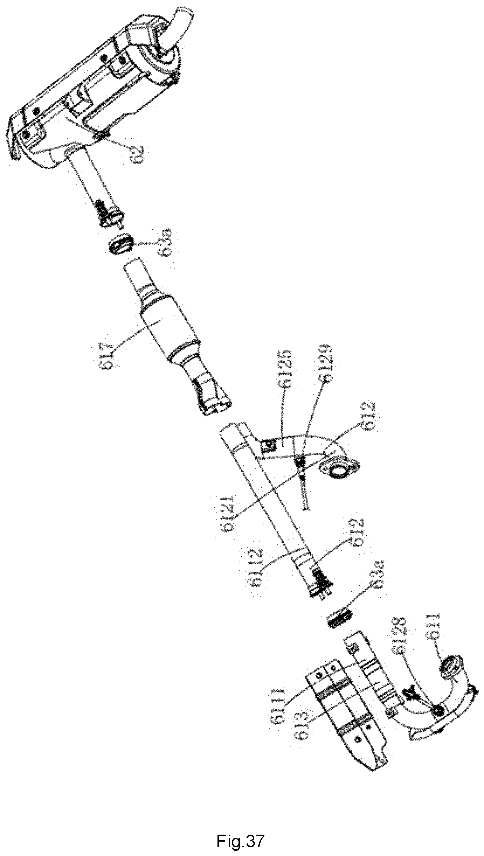

As shown in FIG. 36-37, in some embodiments, the exhaust system 60 is used for the dual-cylinder engine. The exhaust system 60 includes the exhaust conduit 61 and the gas treatment component 62. The waste gas enters the gas treatment component 62 through the exhaust conduit 61, and then discharges into the environment. The exhaust conduit 61 is installed along one side of the frame 10, and the exhaust conduit 61 is the front cylinder exhaust conduit 611 and the rear cylinder exhaust conduit 612. The front cylinder exhaust conduit 611 includes a front elbow section 6111 and a front straight pipe section 6112. The rear cylinder exhaust conduit 612 includes a rear elbow section 6121 and a rear straight pipe section 6122. The front straight pipe section 6112 of the front cylinder exhaust conduit 611 and the rear straight pipe section 6122 of the rear cylinder exhaust conduit 612 are connected. The exhaust conduit 61 is provided with two pre-catalysts and at least one post-catalyst 617. The catalyst is added to conduct more than one catalytic oxidation reaction on the tail gas to reduce the exhaust emission limit. The two pre-catalysts may be a first pre-catalyst 613 and a second pre-catalyst 616. The front elbow section 6111 is equipped with the first pre-catalyst 613, and the rear elbow section 6121 is equipped with the second pre-catalyst 616. The front straight pipe section 6112 is connected to the rear straight pipe section 6122, and is connected to the post-catalyst 617. The front elbow section 6111 is connected to the front cylinder of the engine. The first pre-catalyst 613 is fixed on the front elbow section 6111 and is a portion of the front elbow section 6111. The front elbow section 6111 is connected to the front straight pipe section 6112.

The rear elbow section 6121 is connected to the rear cylinder of the engine, and the second pre-catalyst 616 is fixed on the rear elbow section 6121, and the second pre-catalyst 616 is a portion of the rear elbow section 6121. The rear elbow section 6121 is connected to the front elbow section 6122. The rear end of the front straight pipe section 6112 and the rear end of the front elbow section 6122 are combined to form the same pipe. The rear end of the post-catalyst 617 and the front straight pipe section 6112 are connected to the outlet end of the pipe combined with the rear end of the front elbow section 6122, so that the exhaust gas from the front cylinder of the engine is catalyzed by the first pre-catalyst 613 and the exhaust gas from the rear cylinder of the engine is catalyzed by the second pre-catalyst 616, and both the exhaust gas enter the post-catalyst 617 for secondary catalysis. The post-catalyst 617 is connected to the gas treatment component 62. The exhaust gas catalyzed by the post-catalyst 617 enters the gas treatment component 62 for exhaust gas treatment.

As shown in FIG. 36-37, in some embodiments, the length between the inlet of the first stage catalyst 613 and the front elbow section 6111 is less than 600mm. The distance from the connection position of the first pre-catalyst 613 and the front elbow section 6111 to the inlet of the front elbow section 6111 is less than 600 mm. The distance from the second pre-catalyst 616 to the rear elbow section 6121 is 200-600 mm. The distance from the connection position of the second pre-catalyst 616 and the rear elbow section 6121 to the inlet of the front elbow section 6121 is 200-600 mm.

As shown in FIG. 36-37, in some embodiments, the exhaust conduit 61 is equipped with a first oxygen sensor 6128 and a second oxygen sensor 6129. The first oxygen sensor 6128 is located on the front elbow section 6111 and in front of the first pre-catalyst 613, so the exhaust gas goes through the first oxygen sensor 6128, and then through the first pre-catalyst 613. The length from an inlet of the front elbow section 6111 to the first oxygen sensor 6128 along a central axis of the front elbow section 6111 is in the range from 150 mm to 250 mm, and preferably 150 mm-200 mm. The second oxygen sensor 6129 is located on the rear elbow section 6121 and in front of the second pre-catalyst 616, so the exhaust gas goes through the second oxygen sensor 6129, and then through the second pre-catalyst 616. The distance from a inlet of the front elbow section 6121 to the second oxygen sensor 6129 along a central axis of the front elbow section 6121 is 150 mm-250 mm, preferably 150 mm-200 mm.

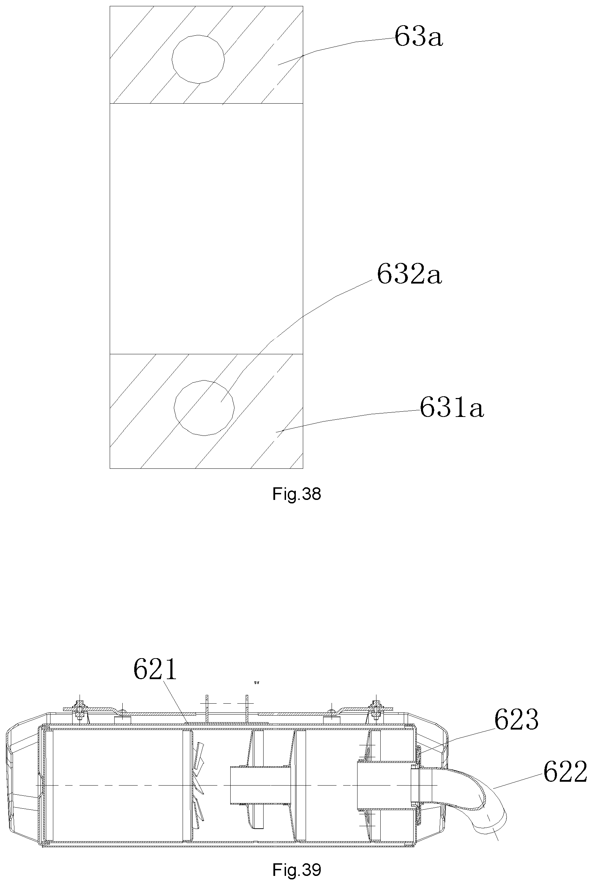

As shown in FIG. 38, in some embodiments, the connection position between the front elbow section 6111 and the front straight pipe section 6112 is sealed with a graphite sealing sleeve 63a. the connection position between the rear elbow section 6121 and the front straight pipe section 6122 is sealed with a graphite sealing sleeve 63a. The graphite sealing sleeve 63a includes a graphite layer 631a and copper wires 632a, wherein the graphite layer is coated on the copper wires. The exhaust conduit 61 is arranged along the length direction of the frame 10, and the exhaust conduit 61 is arranged on one side of the frame 10.

As shown in FIG. 39-40, in some embodiments, the gas treatment component 62 includes a muffler tube 621, an exhaust gas manifold 622, and a spark collector 623. A rib 6231 is arranged on the side wall of the spark collector 623, and the rib 6231 is connected to the side wall at one end of the muffler of the gas treatment component 621.

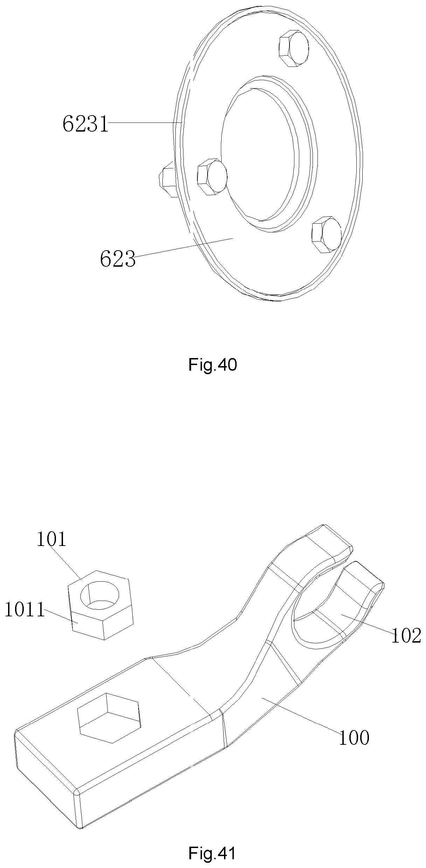

As shown in FIG. 41, in some embodiments, the fuel injector bracket 100 for mounting the fuel injector is arranged on the engine. The fuel injector bracket 100 is provided with a bushing 101 having an outer wall 1011 with a stop plane. The cross-section of bushing 101 is hexagonal. A pipe clamp 102 is arranged on the fuel injector bracket 100, and the pipe is arranged on the pipe clamp 1002.

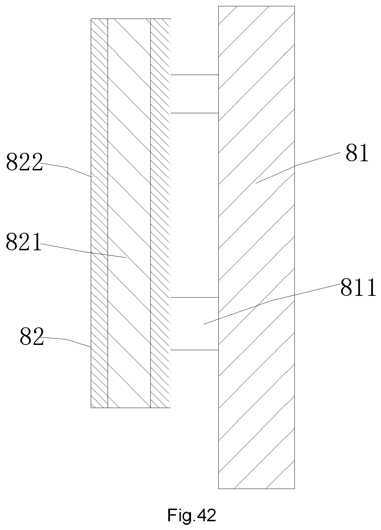

As shown in FIG. 42, in some embodiments, the vehicle cover is installed on the frame. The body cover 80 includes a vehicle cover plate 81 and the heat shield 82. The plastic layer 81 is provided with a plurality of mounting columns 811. The heat shield 82 and the mounting column 811 are connected by bolts. The heat shield 82 includes two aluminum foil layers 822 and a ceramic layer 821 connected between the two aluminum foil layers 822.

In some embodiments, the internal pressure of the exhaust system and/or intake system is 10-100 kPa, and the gas flow into the exhaust system and/or intake system is less than 5 L/min. Under the condition of 10-100 kPa in the exhaust system or intake system, the gas flow is less than 5L/min.

Optionally, it checks the air flow from the exhaust system or intake system or other components to be tested by blocking all air outlets, and then continuously replenishing air to the intake pipe to the predetermined pressure, while maintaining the internal pressure unchanged. It should be noted that the air tightness consistency of the exhaust system and the intake system may also be tested in other ways, for example, by blocking all the air outlets of the exhaust system or the intake system or other parts to be tested, and then adding a certain pressure until the air pressure in the air intake pipe is stable, and then check the air pressure value in the air intake pipe after a period of time. The leakage of the intake and exhaust conduits of a single off-road vehicle at different times shall be measured, and the leakage of all off-road vehicles in a batch of products shall be consistent, thereby reducing the rate of unqualified products that fail to meet the emission limit due to the inconsistent leakage of inlet and exhaust passages.

## Claims

1. An off-road vehicle (100) comprising:
a frame (10);
a pair of front wheels (41);
a pair of rear wheels (42);
a controller (14);
a suspension system (13), comprising a front suspension (131) and a rear suspension (132), the front wheels (41) being connected to the frame (10) by the front suspension (131), and the rear wheels (42) being connected to the frame (10) by the rear suspension (132);
an engine (20) supported on the frame (10), at least one of the front wheels (41) or rear wheels (42) being connected to the engine (20), the engine (20) being equipped with a combustion chamber, the engine (20) comprising a cylinder block (21) and a cylinder head (22) connected to the cylinder block (21), the cylinder head (22) being equipped with an exhaust passage (227); and
a fuel supply system (70) for supplying fuel to the engine (20);
wherein the engine (20) further comprises an exhaust system (60) comprising an exhaust conduit (61a) and a gas treatment component (62) communicating with the exhaust conduit (61a), and the exhaust conduit (61a) communicating with the exhaust passage (227) in the cylinder head (22), and the gas treatment component (62) comprises a muffler (621) and an exhaust gas manifold (622) in fluid communication with the muffler (621);
the cylinder head (22) defines an air supply passage (229a, 229b, 229c) for mixing air into the exhaust gas discharged from the combustion chamber, the air supply passage (229a, 229b, 229c) is in fluid communication with the exhaust passage (227);
the engine (20) further comprises an intake system (30) comprising an air supply pipe (301a, 301b) through which air is feed into the air supply passage (229a, 229b, 229c), an engine air filter (32) and a main intake manifold (33, 333) in fluid communication with the engine air filter (32), wherein the air supply pipe (301a, 301b) is in fluid communication with the air supply air filter; **characterized in that**
the intake system (30) further comprises an air filter (34) of the air supply passage (229a, 229b, 229c); and
a vertical plane is defined as a plane along the centerline of the off-road vehicle (100), and an angle between the projection of an axis in the length direction of the air supply passage (229a, 229b, 229c) on the vertical plane and the projection of an axis in the length direction of the exhaust passage (227) on the vertical plane is greater than or equal to 90°, and the cylinder head (22) defines an air flow buffer (2293a, 2293b) in fluid communication between the air supply passage (229a, 229b, 229c) and the exhaust passage (227);
wherein the cross-sectional area of the air flow buffer (2293a, 2293b) is larger than the cross-sectional area of the air supply passage (229a, 229b, 229c),
and the air flow buffer (2293a, 2293b) is shaped as a trumpet, a hemispherical chamber or a cylindrical enlargement, and the air flow buffer (2293a, 2293b) is configured to reduce the air velocity and to redirect the air so that its flow direction is substantially the same as the exhaust-gas flow direction.

2. The off-road vehicle (100) of claim 1, wherein the cylinder head (22) comprises an air supply passage seat (228), and the air supply passage (229a, 229b, 229c) is defined on the air supply passage seat (228); wherein the air supply passage seat (228) is a portion of the cylinder head (22).

3. The off-road vehicle (100) of claim 2, wherein the air supply passage (229a, 229b, 229c) comprises a connection plane perpendicular to the axis of the air supply passage (229a, 229b, 229c).

4. The off-road vehicle (100) of claim 1, wherein the cylinder head (22) further defines a cooling water passage (221), a plurality of cavities (223) for mounting valve springs, a lubricating oil chamber and an intake passage (226), and the air supply passage (229a, 229b, 229c) is not in fluid communication with the cooling water passage (221), the cavities (223) for installing valve springs, the lubricating oil chamber and the intake passage (226); wherein the cooling water passage (221) is adjacent to the air supply passage (229a, 229b, 229c), and a barrier portion (2294) is arranged between the cooling water passage (221) and the air supply passage (229a, 229b, 229c), and the air supply passage (229a, 229b, 229c) is partly formed on the barrier portion (2294); wherein the barrier portion (2294) is a portion of the cylinder head (22).

5. The off-road vehicle (100) of claim 1, wherein the air filter (34) of air supply passage (229a, 229b, 229c) comprises an air filter housing (341) and a filter paper (342) arranged in the air filter housing (341), and one end of the air filter housing (341) defines an inlet connection (3411), and the other end defines an outlet connection (3412); wherein the intake system (30) further comprises an on-off valve (322a, 322b, 322c) in fluid communication with the air filter (34) of air supply passage (229a, 229b, 229c), the on-off valve (322a, 322b, 322c) is opened when the engine cold is started and the on-off valve (322a, 322b, 322c) is closed when the engine (20) reaches a preset temperature; wherein the on-off valve (322a, 322b, 322c) is selected from the group consisting of flow control valve, duty ratio solenoid valve, normally open solenoid valve and normally closed solenoid valve; wherein the on-off valve (322a, 322b, 322c) and the controller (14) are electrically connected.

6. The off-road vehicle (100) of claim 5, wherein the intake system (30) further comprises a one-way valve (323b) with an inlet connection end in fluid communication with the air filter (34) of air supply passage (229a, 229b, 229c) and an outlet connection end in fluid communication with the air supply pipe (301a, 301b).

7. The off-road vehicle (100) of claim 1, wherein the intake system (30) further comprises an air pump (35, 35c) that pumps air into the air filter (34) of air supply passage (229a, 229b, 229c), and the air pump (35, 35c) is in fluid communication with the air filter (34) of air supply passage (229a, 229b, 229c) through a pipeline.

8. The off-road vehicle (100) of claim 5, wherein the engine (20) is a multi-cylinder engine (20) comprising a front cylinder and a rear cylinder, the on-off valve (322a, 322b, 322c) is provided with a first air supply branch pipe (318, 329, 329c) corresponding to the front cylinder of the engine (20) and a second air supply branch pipe (318, 328, 328c) corresponding to the rear cylinder of the engine (20); wherein the first air supply branch pipe (318, 329, 329c) and/or the second air supply branch pipe (318, 328, 328c) are provided with throttling plugs (320a, 320c).

9. The off-road vehicle (100) of claim 8, wherein the diameters of the first air supply branch pipe (318, 329, 329c) and second air supply branch pipe (318, 328, 328c) are different, and the first air supply branch pipe (318, 329, 329c) and/or the second air supply branch pipe (318, 328, 328c) are provided with throttling plugs (320a, 320c).

10. The off-road vehicle (100) of claim 1, wherein the exhaust conduit (61a) is provided with two pre-catalysts (613, 616) and at least one post-catalyst (617); wherein the pre-catalyst (613, 616) has a starting end and a finish end, and the exhaust conduit (61a) is provided with an inlet of exhaust conduit (61a), and the distance from the inlet of exhaust conduit (61a) to the starting end of pre-catalyst (613, 616) along an axis of the exhaust conduit (61a) is in the range of 200 mm-600 mm; wherein the exhaust conduit (61a) is provided with an inlet of exhaust conduit (61a) and an oxygen sensor (6128, 6129), and the distance from the inlet of exhaust conduit (61a) to the oxygen sensor (6128, 6129) along an axis of the exhaust conduit (61a) is in the range of 150 mm-200 mm.

11. The off-road vehicle (100) of claim 10, wherein the exhaust conduit (61a) comprises a front cylinder exhaust conduit (611) and a rear cylinder exhaust conduit (612), wherein one pre-catalyst (613, 616) is arranged on the front cylinder exhaust conduit (611) and the other pre-catalyst (613, 616) is arranged on the rear cylinder exhaust conduit (612); wherein the front cylinder exhaust conduit (611) comprises a front elbow section (6111) and a front straight pipe section (6112), wherein a pre-catalyst (613, 616) is a portion of the front elbow section (6111); the rear cylinder exhaust conduit comprises a rear elbow section (6121) and a rear straight pipe section (6122), and the other pre-catalyst (613, 616) is a portion of the rear straight pipe section (6122); and the front straight pipe section (6112) and the rear straight pipe section (6122) are in fluid communication with the post-catalyst (617); wherein a graphite seal sleeve (63a) is arranged between the front elbow section (6111) and the front straight pipe section (6112), the graphite seal sleeve (63a) comprises copper wires (632a) and a graphite layer (631a) coated on the copper wires (632a).

12. The off-road vehicle (100) of claim 1, wherein the gas treatment component (62) further comprises a spark collector (623) at the connection between the muffler (621) and the exhaust gas manifold (622), the spark collector (623) is sleeved on the exhaust gas manifold (622), and the side wall of the spark collector (623) is provided with a rib (6231) connected to the side wall at one end of the muffler (621).

## Patentansprüche

1. Geländefahrzeug (100), umfassend:
einen Rahmen (10);
ein Paar Vorderräder (41);
ein Paar Hinterräder (42);
eine Steuereinrichtung (14);
ein Federungssystem (13), umfassend eine Vorderradfederung (131) und eine Hinterradfederung (132), wobei die Vorderräder (41) durch die Vorderradfederung (131) mit dem Rahmen (10) verbunden sind und die Hinterräder (42) durch die Hinterradfederung (132) mit dem Rahmen (10) verbunden sind;
einen auf dem Rahmen (10) abgestützten Motor (20), wobei mindestens eines der Vorderräder (41) oder Hinterräder (42) mit dem Motor (20) verbunden ist, der Motor (20) mit einer Brennkammer versehen ist, der Motor (20) einen Zylinderblock (21) und einen mit dem Zylinderblock (21) verbundenen Zylinderkopf (22) umfasst, wobei der Zylinderkopf (22) mit einem Abgasdurchgang (227) versehen ist; und
ein Kraftstoffversorgungssystem (70) zum Versorgen des Motors (20) mit Kraftstoff;
wobei der Motor (20) ferner ein Abgassystem (60) umfasst, das eine Abgasleitung (61a) und eine mit der Abgasleitung (61a) in Verbindung stehende Abgasbehandlungskomponente (62) umfasst, wobei die Abgasleitung (61a) mit dem Abgasdurchgang (227) in dem Zylinderkopf (22) in Verbindung steht, und die Abgasbehandlungskomponente (62) einen Schalldämpfer (621) und einen mit dem Schalldämpfer (621) in Fluidverbindung stehenden Abgaskrümmer (622) umfasst;
der Zylinderkopf (22) einen Luftzuführungsdurchgang (229a, 229b, 229c) definiert, um Luft in das aus der Brennkammer abgeführte Abgas einzumischen, wobei der Luftzuführungsdurchgang (229a, 229b, 229c) mit dem Abgasdurchgang (227) in Fluidverbindung steht;
der Motor (20) ferner ein Ansaugsystem (30) umfasst, das ein Luftzuführungsrohr (301a, 301b), durch das Luft in den Luftzuführungsdurchgang (229a, 229b, 229c) eingespeist wird, einen Motorluftfilter (32) und einen mit dem Motorluftfilter (32) in Fluidverbindung stehenden Hauptansaugkrümmer (33, 333) umfasst, wobei das Luftzuführungsrohr (301a, 301b) mit dem Luftfilter der Luftzuführung in Fluidverbindung steht; **dadurch gekennzeichnet, dass**
das Ansaugsystem (30) ferner einen Luftfilter (34) des Luftzuführungsdurchgangs (229a, 229b, 229c) umfasst; und
eine vertikale Ebene als eine Ebene entlang der Mittellinie des Geländefahrzeugs (100) definiert ist, und ein Winkel zwischen der Projektion einer Achse in der Längsrichtung des Luftzuführungsdurchgangs (229a, 229b, 229c) auf die vertikale Ebene und der Projektion einer Achse in der Längsrichtung des Abgasdurchgangs (227) auf die vertikale Ebene größer als oder gleich 90° ist, und der Zylinderkopf (22) einen Luftstrompuffer (2293a, 2293b) definiert, der zwischen dem Luftzuführungsdurchgang (229a, 229b, 229c) und dem Abgasdurchgang (227) in Fluidverbindung steht;
wobei die Querschnittsfläche des Luftstrompuffers (2293a, 2293b) größer ist als die Querschnittsfläche des Luftzuführungsdurchgangs (229a, 229b, 229c),
und der Luftstrompuffer (2293a, 2293b) die Form einer Trompete, einer halbkugelförmigen Kammer oder einer zylindrischen Erweiterung aufweist, und der Luftstrompuffer (2293a, 2293b) dazu ausgebildet ist, die Luftgeschwindigkeit zu reduzieren und die Luft umzulenken, so dass ihre Strömungsrichtung im Wesentlichen dieselbe ist wie die Abgasströmungsrichtung.

2. Geländefahrzeug (100) nach Anspruch 1, wobei der Zylinderkopf (22) einen Luftzuführungsdurchgangssitz (228) umfasst, und der Luftzuführungsdurchgang (229a, 229b, 229c) an dem Luftzuführungsdurchgangssitz (228) definiert ist; wobei der Luftzuführungsdurchgangssitz (228) ein Teil des Zylinderkopfs (22) ist

3. Geländefahrzeug (100) nach Anspruch 2, wobei der Luftzuführungsdurchgang (229a, 229b, 229c) eine Anschlussebene umfasst, die senkrecht zu der Achse des Luftzuführungsdurchgangs (229a, 229b, 229c) ist.

4. Geländefahrzeug (100) nach Anspruch 1, wobei der Zylinderkopf (22) ferner einen Kühlwasserdurchgang (221), eine Mehrzahl von Hohlräumen (223) zum Montieren von Ventilfedern, eine Schmierölkammer und einen Ansaugdurchgang (226) definiert, und der Luftzuführungsdurchgang (229a, 229b, 229c) nicht mit dem Kühlwasserdurchgang (221), den Hohlräumen (223) zum Installieren von Ventilfedern, der Schmierölkammer und dem Ansaugdurchgang (226) in Fluidverbindung steht; wobei der Kühlwasserdurchgang (221) an den Luftzuführungsdurchgang (229a, 229b, 229c) angrenzt, und ein Barriereabschnitt (2294) zwischen dem Kühlwasserdurchgang (221) und dem Luftzuführungsdurchgang (229a, 229b, 229c) angeordnet ist, und der Luftzuführungsdurchgang (229a, 229b, 229c) teilweise an dem Barriereabschnitt (2294) ausgebildet ist; wobei der Barriereabschnitt (2294) ein Teil des Zylinderkopfs (22) ist.

5. Geländefahrzeug (100) nach Anspruch 1, wobei der Luftfilter (34) des Luftzuführungsdurchgangs (229a, 229b, 229c) ein Luftfiltergehäuse (341) und ein in dem Luftfiltergehäuse (341) angeordnetes Filterpapier (342) umfasst, und ein Ende des Luftfiltergehäuses (341) einen Einlassanschluss (3411) definiert und das andere Ende einen Auslassanschluss (3412) definiert; wobei das Ansaugsystem (30) ferner ein Ein-/Aus-Ventil (322a, 322b, 322c) umfasst, das mit dem Luftfilter (34) des Luftzuführungsdurchgangs (229a, 229b, 229c) in Fluidverbindung steht, wobei das Ein-/Aus-Ventil (322a, 322b, 322c) beim Kaltstart des Motors geöffnet ist und das Ein-/Aus-Ventil (322a, 322b, 322c) geschlossen ist, wenn der Motor (20) eine voreingestellte Temperatur erreicht; wobei das Ein-/Aus-Ventil (322a, 322b, 322c) ausgewählt ist aus der Gruppe bestehend aus Durchflussregelventil, Magnetventil mit Tastverhältnissteuerung, normalerweise offenem Magnetventil und normalerweise geschlossenem Magnetventil; wobei das Ein-/Aus-Ventil (322a, 322b, 322c) und die Steuereinrichtung (14) elektrisch verbunden sind.

6. Geländefahrzeug (100) nach Anspruch 5, wobei das Ansaugsystem (30) ferner ein Einwegventil (323b) umfasst, das ein mit dem Luftfilter (34) des Luftzuführungsdurchgangs (229a, 229b, 229c) in Fluidverbindung stehendes Einlassanschlussende und ein mit dem Luftzuführungsrohr (301a, 301b) in Fluidverbindung stehendes Auslassanschlussende aufweist.

7. Geländefahrzeug (100) nach Anspruch 1, wobei das Ansaugsystem (30) ferner eine Luftpumpe (35, 35c) umfasst, die Luft in den Luftfilter (34) des Luftzuführungsdurchgangs (229a, 229b, 229c) pumpt, und die Luftpumpe (35, 35c) über eine Rohrleitung mit dem Luftfilter (34) des Luftzuführungsdurchgangs (229a, 229b, 229c) in Fluidverbindung steht.

8. Geländefahrzeug (100) nach Anspruch 5, wobei der Motor (20) ein Mehrzylindermotor (20) ist, der einen vorderen Zylinder und einen hinteren Zylinder umfasst, das Ein-/Aus-Ventil (322a, 322b, 322c) mit einem ersten Luftzuführungszweigrohr (318, 329, 329c), das dem vorderen Zylinder des Motors (20) entspricht, und einem zweiten Luftzuführungszweigrohr (318, 328, 328c), das dem hinteren Zylinder des Motors (20) entspricht, versehen ist; wobei das erste Luftzuführungszweigrohr (318, 329, 329c) und/oder das zweite Luftzuführungszweigrohr (318, 328, 328c) mit Drosselstopfen (320a, 320c) versehen sind.

9. Geländefahrzeug (100) nach Anspruch 8, wobei die Durchmesser des ersten Luftzuführungszweigrohrs (318, 329, 329c) und des zweiten Luftzuführungszweigrohrs (318, 328, 328c) unterschiedlich sind, und das erste Luftzuführungszweigrohr (318, 329, 329c) und/oder das zweite Luftzuführungszweigrohr (318, 328, 328c) mit Drosselstopfen (320a, 320c) versehen sind.

10. Geländefahrzeug (100) nach Anspruch 1, wobei die Abgasleitung (61a) mit zwei Vorkatalysatoren (613, 616) und mindestens einem Nachkatalysator (617) versehen ist; wobei der Vorkatalysator (613, 616) ein Anfangsende und ein Endende aufweist, und die Abgasleitung (61a) mit einem Einlass der Abgasleitung (61a) versehen ist, und der Abstand von dem Einlass der Abgasleitung (61a) zu dem Anfangsende des Vorkatalysators (613, 616) entlang einer Achse der Abgasleitung (61a) in dem Bereich von 200 mm-600 mm liegt; wobei die Abgasleitung (61a) mit einem Einlass der Abgasleitung (61a) und einem Sauerstoffsensor (6128, 6129) versehen ist, und der Abstand von dem Einlass der Abgasleitung (61a) zu dem Sauerstoffsensor (6128, 6129) entlang einer Achse der Abgasleitung (61a) in dem Bereich von 150 mm-200 mm liegt.

11. Geländefahrzeug (100) nach Anspruch 10, wobei die Abgasleitung (61a) eine vordere Zylinderabgasleitung (611) und eine hintere Zylinderabgasleitung (612) umfasst, wobei einer der Vorkatalysatoren (613, 616) an der vorderen Zylinderabgasleitung (611) angeordnet ist und der andere Vorkatalysator (613, 616) an der hinteren Zylinderabgasleitung (612) angeordnet ist; wobei die vordere Zylinderabgasleitung (611) einen vorderen Krümmerabschnitt (6111) und einen vorderen geraden Rohrabschnitt (6112) umfasst, wobei ein Vorkatalysator (613, 616) ein Teil des vorderen Krümmerabschnitts (6111) ist; die hintere Zylinderabgasleitung einen hinteren Krümmerabschnitt (6121) und einen hinteren geraden Rohrabschnitt (6122) umfasst, und der andere Vorkatalysator (613, 616) ein Teil des hinteren geraden Rohrabschnitts (6122) ist; und der vordere gerade Rohrabschnitt (6112) und der hintere gerade Rohrabschnitt (6122) mit dem Nachkatalysator (617) in Fluidverbindung stehen; wobei eine Graphit-Dichthülse (63a) zwischen dem vorderen Krümmerabschnitt (6111) und dem vorderen geraden Rohrabschnitt (6112) angeordnet ist, die Graphit-Dichthülse (63a) Kupferdrähte (632a) und eine auf die Kupferdrähte (632a) beschichtete Graphitschicht (631a) umfasst.

12. Geländefahrzeug (100) nach Anspruch 1, wobei die Abgasbehandlungskomponente (62) ferner einen Funkenfänger (623) an der Verbindung zwischen dem Schalldämpfer (621) und dem Abgaskrümmer (622) umfasst, wobei der Funkenfänger (623) auf den Abgaskrümmer (622) aufgesteckt ist, und die Seitenwand des Funkenfängers (623) mit einer Rippe (6231) versehen ist, die an einem Ende des Schalldämpfers (621) mit der Seitenwand verbunden ist.

## Revendications

1. Véhicule tout-terrain (100), comprenant :
un châssis (10) ;
une paire de roues avant (41) ;
une paire de roues arrière (42) ;
une unité de commande (14) ;
un système de suspension (13), comprenant une suspension avant (131) et une suspension arrière (132), les roues avant (41) étant reliées au châssis (10) par la suspension avant (131), et les roues arrière (42) étant reliées au châssis (10) par la suspension arrière (132) ;
un moteur (20) supporté sur le châssis (10), au moins l'une des roues avant (41) ou des roues arrière (42) étant reliée au moteur (20), le moteur (20) étant équipé d'une chambre de combustion, le moteur (20) comprenant un bloc-cylindres (21) et une culasse (22) reliée au bloc-cylindres (21), la culasse (22) étant équipée d'un passage d'échappement (227) ; et
un système d'alimentation en carburant (70) pour fournir du carburant au moteur (20) ;
dans lequel le moteur (20) comprend en outre un système d'échappement (60) comprenant un conduit d'échappement (61a) et un composant de traitement des gaz d'échappement (62) communiquant avec le conduit d'échappement (61a), le conduit d'échappement (61a) communiquant avec le passage d'échappement (227) dans la culasse (22), et le composant de traitement des gaz d'échappement (62) comprend un silencieux (621) et un collecteur d'échappement (622) en communication fluidique avec le silencieux (621) ;
la culasse (22) définissant un passage d'alimentation en air (229a, 229b, 229c) pour mélanger de l'air au gaz d'échappement évacué de la chambre de combustion, le passage d'alimentation en air (229a, 229b, 229c) étant en communication fluidique avec le passage d'échappement (227) ;
le moteur (20) comprenant en outre un système d'admission (30) comprenant un conduit d'alimentation en air (301a, 301b) à travers lequel de l'air est alimenté dans le passage d'alimentation en air (229a, 229b, 229c), un filtre à air moteur (32) et un collecteur principal d'admission (33, 333) en communication fluidique avec le filtre à air moteur (32), dans lequel le conduit d'alimentation en air (301a, 301b) est en communication fluidique avec le filtre à air d'alimentation en air ; **caractérisé en ce que**
le système d'admission (30) comprend en outre un filtre à air (34) du passage d'alimentation en air (229a, 229b, 229c) ; et
un plan vertical est défini comme étant un plan suivant la ligne centrale du véhicule tout-terrain (100), et un angle entre la projection d'un axe dans la direction de longueur du passage d'alimentation en air (229a, 229b, 229c) sur le plan vertical et la projection d'un axe dans la direction de longueur du passage d'échappement (227) sur le plan vertical est supérieur ou égal à 90°, et la culasse (22) définit un tampon d'écoulement d'air (2293a, 2293b) en communication fluidique entre le passage d'alimentation en air (229a, 229b, 229c) et le passage d'échappement (227) ;
dans lequel l'aire de section transversale du tampon d'écoulement d'air (2293a, 2293b) est plus grande que l'aire de section transversale du passage d'alimentation en air (229a, 229b, 229c),
et le tampon d'écoulement d'air (2293a, 2293b) est en forme de trompette, de chambre hémisphérique ou d'élargissement cylindrique, et le tampon d'écoulement d'air (2293a, 2293b) est configuré pour réduire la vitesse de l'air et rediriger l'air de sorte que sa direction d'écoulement soit sensiblement la même que la direction d'écoulement des gaz d'échappement.

2. Véhicule tout-terrain (100) selon la revendication 1, dans lequel la culasse (22) comprend un siège de passage d'alimentation en air (228), et le passage d'alimentation en air (229a, 229b, 229c) est défini sur le siège de passage d'alimentation en air (228) ; dans lequel le siège de passage d'alimentation en air (228) est une partie de la culasse (22).

3. Véhicule tout-terrain (100) selon la revendication 2, dans lequel le passage d'alimentation en air (229a, 229b, 229c) comprend un plan de raccordement perpendiculaire à l'axe du passage d'alimentation en air (229a, 229b, 229c).

4. Véhicule tout-terrain (100) selon la revendication 1, dans lequel la culasse (22) définit en outre un passage d'eau de refroidissement (221), une pluralité de cavités (223) pour monter des ressorts de soupape, une chambre d'huile de lubrification et un passage d'admission (226), et le passage d'alimentation en air (229a, 229b, 229c) n'est pas en communication fluidique avec le passage d'eau de refroidissement (221), les cavités (223) pour installer des ressorts de soupape, la chambre d'huile de lubrification et le passage d'admission (226) ; dans lequel le passage d'eau de refroidissement (221) est adjacent au passage d'alimentation en air (229a, 229b, 229c), et une portion de barrière (2294) est agencée entre le passage d'eau de refroidissement (221) et le passage d'alimentation en air (229a, 229b, 229c), et le passage d'alimentation en air (229a, 229b, 229c) est en partie formé sur la portion de barrière (2294) ; dans lequel la portion de barrière (2294) est une partie de la culasse (22).

5. Véhicule tout-terrain (100) selon la revendication 1, dans lequel le filtre à air (34) du passage d'alimentation en air (229a, 229b, 229c) comprend un boîtier de filtre à air (341) et un papier filtre (342) agencé dans le boîtier de filtre à air (341), et une extrémité du boîtier de filtre à air (341) définit un raccord d'entrée (3411), et l'autre extrémité définit un raccord de sortie (3412) ; dans lequel le système d'admission (30) comprend en outre une vanne marche-arrêt (322a, 322b, 322c) en communication fluidique avec le filtre à air (34) du passage d'alimentation en air (229a, 229b, 229c), la vanne marche-arrêt (322a, 322b, 322c) étant ouverte lors d'un démarrage à froid du moteur et la vanne marche-arrêt (322a, 322b, 322c) étant fermée lorsque le moteur (20) atteint une température prédéfinie ; dans lequel la vanne marche-arrêt (322a, 322b, 322c) est sélectionnée dans le groupe constitué d'une vanne de commande de débit, d'une électrovanne à rapport cyclique, d'une électrovanne normalement ouverte et d'une électrovanne normalement fermée ; dans lequel la vanne marche-arrêt (322a, 322b, 322c) et l'unité de commande (14) sont électriquement connectées.

6. Véhicule tout-terrain (100) selon la revendication 5, dans lequel le système d'admission (30) comprend en outre un clapet anti-retour (323b) ayant une extrémité de raccord d'entrée en communication fluidique avec le filtre à air (34) du passage d'alimentation en air (229a, 229b, 229c) et une extrémité de raccord de sortie en communication fluidique avec le conduit d'alimentation en air (301a, 301b).

7. Véhicule tout-terrain (100) selon la revendication 1, dans lequel le système d'admission (30) comprend en outre une pompe à air (35, 35c) qui pompe de l'air dans le filtre à air (34) du passage d'alimentation en air (229a, 229b, 229c), et la pompe à air (35, 35c) est en communication fluidique avec le filtre à air (34) du passage d'alimentation en air (229a, 229b, 229c) par l'intermédiaire d'une conduite.

8. Véhicule tout-terrain (100) selon la revendication 5, dans lequel le moteur (20) est un moteur multicylindre (20) comprenant un cylindre avant et un cylindre arrière, la vanne marche-arrêt (322a, 322b, 322c) étant pourvue d'un premier tuyau de dérivation d'alimentation en air (318, 329, 329c) correspondant au cylindre avant du moteur (20) et d'un deuxième tuyau de dérivation d'alimentation en air (318, 328, 328c) correspondant au cylindre arrière du moteur (20) ; dans lequel le premier tuyau de dérivation d'alimentation en air (318, 329, 329c) et/ou le deuxième tuyau de dérivation d'alimentation en air (318, 328, 328c) sont pourvus de bouchons d'étranglement (320a, 320c).

9. Véhicule tout-terrain (100) selon la revendication 8, dans lequel les diamètres du premier tuyau de dérivation d'alimentation en air (318, 329, 329c) et du deuxième tuyau de dérivation d'alimentation en air (318, 328, 328c) sont différents, et le premier tuyau de dérivation d'alimentation en air (318, 329, 329c) et/ou le deuxième tuyau de dérivation d'alimentation en air (318, 328, 328c) sont pourvus de bouchons d'étranglement (320a, 320c).

10. Véhicule tout-terrain (100) selon la revendication 1, dans lequel le conduit d'échappement (61a) est pourvu de deux précatalyseurs (613, 616) et d'au moins un post-catalyseur (617) ; dans lequel le précatalyseur (613, 616) a une extrémité de début et une extrémité de fin, et le conduit d'échappement (61a) est pourvu d'une entrée du conduit d'échappement (61a), et la distance entre l'entrée du conduit d'échappement (61a) et l'extrémité de début du précatalyseur (613, 616) le long d'un axe du conduit d'échappement (61a) est dans une plage de 200 mm-600 mm ; dans lequel le conduit d'échappement (61a) est pourvu d'une entrée du conduit d'échappement (61a) et d'un capteur d'oxygène (6128, 6129), et la distance entre l'entrée du conduit d'échappement (61a) et le capteur d'oxygène (6128, 6129) le long d'un axe du conduit d'échappement (61a) est dans une plage de 150 mm-200 mm.

11. Véhicule tout-terrain (100) selon la revendication 10, dans lequel le conduit d'échappement (61a) comprend un conduit d'échappement de cylindre avant (611) et un conduit d'échappement de cylindre arrière (612), dans lequel l'un des précatalyseurs (613, 616) est agencé sur le conduit d'échappement de cylindre avant (611) et l'autre précatalyseur (613, 616) est agencé sur le conduit d'échappement de cylindre arrière (612) ; dans lequel le conduit d'échappement de cylindre avant (611) comprend une section coudée avant (6111) et une section de tuyau rectiligne avant (6112), dans lequel un précatalyseur (613, 616) est une partie de la section coudée avant (6111) ; le conduit d'échappement de cylindre arrière comprend une section coudée arrière (6121) et une section de tuyau rectiligne arrière (6122), et l'autre précatalyseur (613, 616) est une partie de la section de tuyau rectiligne arrière (6122) ; et la section de tuyau rectiligne avant (6112) et la section de tuyau rectiligne arrière (6122) sont en communication fluidique avec le post-catalyseur (617) ; dans lequel un manchon d'étanchéité en graphite (63a) est agencé entre la section coudée avant (6111) et la section de tuyau rectiligne avant (6112), le manchon d'étanchéité en graphite (63a) comprenant des fils de cuivre (632a) et une couche de graphite (631a) revêtue sur les fils de cuivre (632a).

12. Véhicule tout-terrain (100) selon la revendication 1, dans lequel le composant de traitement des gaz d'échappement (62) comprend en outre un pare-étincelles (623) à la connexion entre le silencieux (621) et le collecteur d'échappement (622), le pare-étincelles (623) étant emmanché sur le collecteur d'échappement (622), et la paroi latérale du pare-étincelles (623) étant pourvue d'une nervure (6231) connectée à la paroi latérale à une extrémité du silencieux (621).
